(19) Europäisches Patentamt
European Patent Office
Office européen des brevets

(11) **EP 4 661 235 A1**

(12) **EUROPEAN PATENT APPLICATION**
published in accordance with Art. 153(4) EPC

(43) Date of publication:
**10.12.2025 Bulletin 2025/50**

(21) Application number: **23919779.1**

(22) Date of filing: **03.02.2023**

(51) International Patent Classification (IPC):
*H02J 3/24* (2006.01)    *H02J 3/38* (2006.01)

(52) Cooperative Patent Classification (CPC):
**H02J 3/24; H02J 3/38**

(86) International application number:
**PCT/JP2023/003635**

(87) International publication number:
**WO 2024/161642 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: MITSUBISHI ELECTRIC
CORPORATION
Chiyoda-ku
Tokyo 100-8310 (JP)

(72) Inventors:
• YAMANE, Keisuke
Tokyo 100-8310 (JP)
• SAWABE, Takeshi
Tokyo 100-8310 (JP)
• YASUNAMI, Kazuhiro
Tokyo 100-8310 (JP)

(74) Representative: **Meissner Bolte Partnerschaft
mbB**
**Patentanwälte Rechtsanwälte**
**Postfach 86 06 24**
**81633 München (DE)**

(54) **DISTRIBUTED POWER SUPPLY CONTROL SYSTEM, DISTRIBUTED POWER SUPPLY CONTROL DEVICE, CENTRAL PROCESSING UNIT, DISTRIBUTED POWER SUPPLY CONTROL METHOD, SYSTEM STABILIZATION CONTROL METHOD, AND CONTROL PARAMETER SETTING METHOD**

(57)    A distributed power supply control system (4) includes: a central calculation device (5) that sets a control parameter of power control that is performed by a plurality of distributed power supply control devices (6-1 to 6-4) each connected to a corresponding one of different distributed power supplies (7-1 to 7-4), the power control being performed on power supplied from the distributed power supply (7-1 to 7-4); and a plurality of the distributed power supply control devices (6-1 to 6-4) that each measure a system state that is a state of power at a point of a transmission and distribution system (1) connected thereto, calculate an emergency control amount according to a type of a system disturbance by using measurement information on the system state and the control parameter when the system disturbance occurs in the transmission and distribution system (1), and perform the power control.

FIG.1

## Description

Field

The present disclosure relates to a distributed power supply control system to which a distributed power supply is connected, a distributed power supply control device, a central calculation device, a distributed power supply control method, a system stabilization control method, and a control parameter setting method.

Background

Conventionally, when a system disturbance occurs in a power system due to an earthquake, a lightning stroke, or the like, the power system becomes unstable, and a large-scale power failure may occur. In recent years, renewable energy power sources have been introduced. However, since the renewable energy power sources are interconnected to a power system via an inverter, the renewable energy power sources do not have inertia unlike conventional synchronous generators. Therefore, in a power system in which a large number of renewable energy power supplies are interconnected and the number of synchronous generators is reduced, there is a concern that the power system tends to be unstable and the risk of occurrence of a large-scale power failure increases. For this reason, a technique of providing a system stabilization function in a distributed power supply such as a renewable energy power supply or a storage battery system has been developed. In general, at the time of occurrence of a system disturbance, a voltage, a power flow, a frequency, and the like change in a complicated manner, and the manner of the change varies depending on the type of the system disturbance that has occurred. Therefore, control to be performed by the distributed power supply for system stabilization differs. Therefore, the distributed power supply needs to appropriately detect and determine the generated system disturbance and perform appropriate stabilization control.

For example, Patent Literature 1 discloses, as a technique related to a power system control device including a power conversion device, a technique of determining the type of a system disturbance from the voltage and frequency deviation of the system based on measurement data such as the voltage and frequency measured by the power conversion device, and selecting a control method for controlling active power and reactive power output by the power conversion device.

Citation List

Patent Literature

Patent Literature 1: Japanese Patent Application Laid-open No. 2021-182815

Summary of Invention

Problem to be solved by the Invention

However, the above-described conventional technique handles only system disturbance in which voltage drop occurs. Therefore, there is a problem that it is not possible to appropriately control the system disturbance not accompanied by voltage drop.

The present disclosure has been made in view of the above, and an object thereof is to obtain a distributed power supply control system capable of improving the stability of the power system.

Means to Solve the Problem

To solve the above problem and achieve the object, a distributed power supply control system in the present disclosure comprises: a central calculation device to set a control parameter of power control that is performed by a plurality of distributed power supply control devices each connected to a corresponding one of different distributed power supplies, the power control being performed on power supplied from the distributed power supply; and the plurality of the distributed power supply control devices each to measure a system state that is a state of power at a point of a transmission and distribution system connected thereto, calculate an emergency control amount according to a type of a system disturbance by using measurement information on the system state and the control parameter when the system disturbance occurs in the transmission and distribution system, and perform the power control.

Effects of the Invention

The distributed power supply control system of the present disclosure has an effect that the stability of the power system can be improved.

Brief Description of Drawings

FIG. 1 is a diagram illustrating an exemplary configuration of a power system according to the first embodiment.
FIG. 2 is a block diagram illustrating an exemplary configuration of the central calculation device according to the first embodiment.
FIG. 3 is a block diagram illustrating an exemplary configuration of the distributed power supply control device according to the first embodiment.
FIG. 4 is a diagram illustrating an example of a generator phase angle when a ground fault or a short circuit fault occurs in the transmission and distribution system according to the first embodiment, and temporal changes of active power and reactive power output by emergency control performed by the distributed power supply control device when the ground fault or the short circuit fault occurs.

FIG. 5 is a diagram illustrating an example of temporal changes of the system frequency F when the power supply drop or the power supply line route interruption fault occurs in the transmission and distribution system according to the first embodiment, and the active power and the reactive power output by the emergency control performed by the distributed power supply control device when the power supply drop or the power supply line route interruption fault occurs.

FIG. 6 is a diagram illustrating an example of temporal changes of the system frequency when the load drop or the load line route interruption fault occurs in the transmission and distribution system according to the first embodiment, and the active power and the reactive power output by the emergency control performed by the distributed power supply control device 6 when the load drop or the load line route interruption fault occurs.

FIG. 7 is a diagram illustrating an example of a normal-time control logic implemented in the distributed power supply control device according to the first embodiment.

FIG. 8 is a flowchart illustrating an operation for the emergency control amount calculation unit of the distributed power supply control device according to the first embodiment to select emergency control to be performed by determining whether a system disturbance has occurred and a type of the system disturbance when the system disturbance has occurred.

FIG. 9 is a flowchart illustrating the operation of the distributed power supply control system according to the first embodiment.

FIG. 10 is a flowchart illustrating the operation of the distributed power supply control device according to the first embodiment.

FIG. 11 is a flowchart illustrating the operation of the central calculation device according to the first embodiment.

FIG. 12 is a diagram illustrating an exemplary configuration of processing circuitry in the case that the processing circuitry that implements the distributed power supply control device according to the first embodiment is implemented by a processor and a memory.

FIG. 13 is a diagram illustrating an exemplary configuration of processing circuitry in the case that the processing circuitry that implements the distributed power supply control device according to the first embodiment is implemented by dedicated hardware.

FIG. 14 is a first flowchart illustrating an operation for the emergency control amount calculation unit of the distributed power supply control device according to the second embodiment to select the emergency control to be performed by determining whether system disturbance occurs and the type of the system disturbance when the system disturbance occurs.

FIG. 15 is a second flowchart illustrating an operation for the emergency control amount calculation unit of the distributed power supply control device according to the second embodiment to select the emergency control to be performed by determining whether system disturbance occurs and the type of the system disturbance occurs.

FIG. 16 is a third flowchart illustrating an operation for the emergency control amount calculation unit of the distributed power supply control device according to the second embodiment to select the emergency control to be performed by determining whether system disturbance occurs and the type of the system disturbance when the system disturbance occurs.

FIG. 17 is a fourth flowchart illustrating an operation for the emergency control amount calculation unit of the distributed power supply control device according to the second embodiment to select the emergency control to be performed by determining whether system disturbance occurs and the type of the system disturbance when the system disturbance occurs.

FIG. 18 is a block diagram illustrating an exemplary configuration of the central calculation device according to the third embodiment.

FIG. 19 is a block diagram illustrating an exemplary configuration of the distributed power supply control device according to the third embodiment.

FIG. 20 is a block diagram illustrating an exemplary configuration of the distributed power supply control device according to the fourth embodiment.

FIG. 21 is a flowchart illustrating an operation in which the voltage-current control mode setting unit changes the control mode of the power converter when a system disturbance occurs in normal times in the distributed power supply control device according to the fourth embodiment.

FIG. 22 is a flowchart illustrating an operation in which the voltage-current control mode setting unit changes the control mode of the power converter when the system disturbance converges at the time of occurrence of the system disturbance in the distributed power supply control device according to the fourth embodiment.

Description of Embodiments

Hereinafter, a distributed power supply control system, a distributed power supply control device, a central calculation device, a distributed power supply control method, a system stabilization control method, and a control parameter setting method according to embodiments of the present disclosure will be described in detail with reference to the drawings.

First Embodiment.

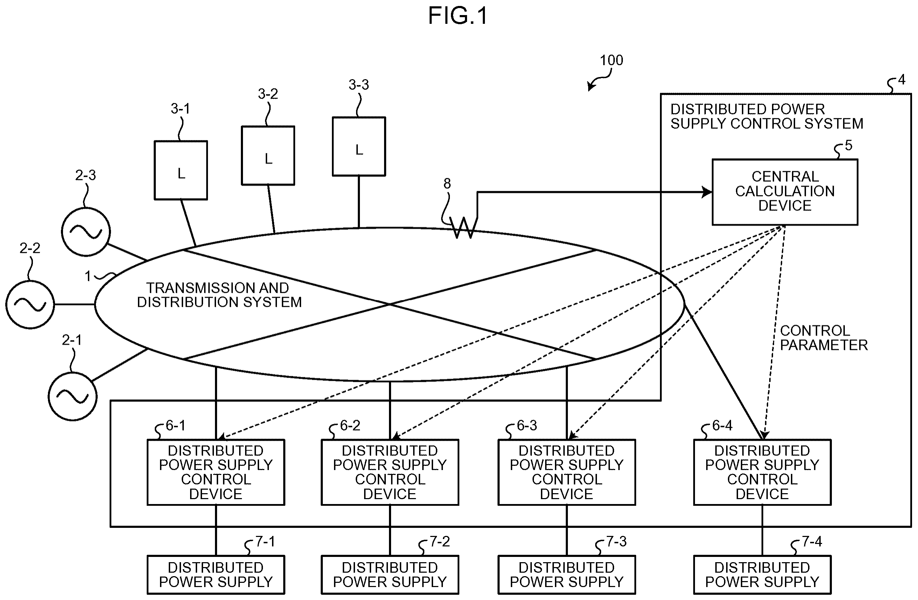

FIG. 1 is a diagram illustrating an exemplary configuration of a power system 100 according to the first embodiment. As illustrated in FIG. 1, the power system 100 includes a transmission and distribution system 1, large-scale power supply facilities 2-1 to 2-3, loads 3-1 to 3-3, a distributed power supply control system 4, a plurality of distributed power supplies 7-1 to 7-4, and a measurement device 8 of the transmission and distribution system 1. The distributed power supply control system 4 includes a central calculation device 5 and distributed power supply control devices 6-1 to 6-4. In the example of FIG. 1, there are three large-scale power supply facilities 2-1 to 2-3 and three loads 3-1 to 3-3, and there are four distributed power supply control devices 6-1 to 6-4 and four distributed power supplies 7-1 to 7-4, but the number is not limited thereto. In addition, in the example of FIG. 1, there is only one measurement device 8, but there may be a plurality of measurement devices 8. Hereinafter, when the large-scale power supply facilities 2-1 to 2-3, the distributed power supply control devices 6-1 to 6-4, and the distributed power supplies 7-1 to 7-4 are indicated without distinction, they are referred to as the large-scale power supply facility 2, the load 3, the distributed power supply control device 6, and the distributed power supply 7, respectively. The distributed power supply control system 4 is a system including a plurality of distributed power supply control devices 6 and the central calculation device 5 that controls operations of the plurality of distributed power supply control devices 6.

The large-scale power supply facility 2 is a power supply such as a thermal power plant. The load 3 is a consumer such as a company or an individual's home. The distributed power supply 7 is a power source using renewable energy such as solar power generation (hereinafter referred to as photovoltaics (PV)) or wind power generation. The distributed power supply 7 may be a power source including a power storage device such as a storage battery.

The distributed power supply control device 6 is a device that controls generated power of the distributed power supply 7. The distributed power supply control device 6 includes a power converter such as an inverter circuit for interchanging power between the distributed power supply 7 and the transmission and distribution system 1.

The central calculation device 5 is connected to the distributed power supply control device 6 and the measurement device 8 via a communication network. The communication network may be the Internet, a dedicated network, or a network using both of them. The central calculation device 5 receives measurement information indicating a system state, which is a state of power of the transmission and distribution system 1 measured by the measurement device 8, via a communication network, grasps a situation of the transmission and distribution system 1, and uses the measurement information for calculation or the like performed by the central calculation device 5. In addition, the central calculation device 5 receives distributed power supply information including the operation state of the distributed power supply 7 from the distributed power supply control device 6 via the communication network. The distributed power supply information includes, for example, a facility capacity of the distributed power supply 7, a current output state from the distributed power supply 7, a charge power amount when the distributed power supply 7 has a storage capacity, and the like. The central calculation device 5 sets a control parameter of power control for the distributed power supply 7 performed by the distributed power supply control device 6, and transmits the control parameter to the distributed power supply control device 6 via a communication network.

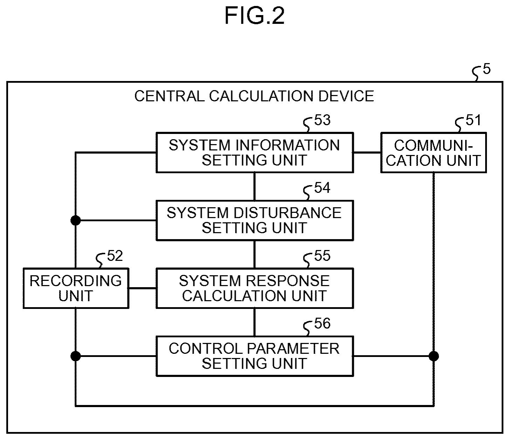

FIG. 2 is a block diagram illustrating an exemplary configuration of the central calculation device 5 according to the first embodiment. As illustrated in FIG. 2, the central calculation device 5 includes a communication unit 51, a recording unit 52, a system information setting unit 53, a system disturbance setting unit 54, a system response calculation unit 55, and a control parameter setting unit 56.

The communication unit 51 communicates with the measurement device 8 installed in the transmission and distribution system 1 and the distributed power supply control device 6 via a communication network. The communication unit 51 receives, from the measurement device 8 connected to the transmission and distribution system 1, measurement information indicating a system state which is a state of power of the transmission and distribution system 1 measured by the measurement device 8. The measurement information received from the measurement device 8 includes, for example, at least one of an operation state, demand, a voltage flow state, a power flow state, and the like of the generator. In addition, the communication unit 51 receives, from a plurality of distributed power supply control devices 6 each connected to a corresponding one of different distributed power supplies 7, distributed power supply information including an operation state of the distributed power supply 7, and measurement information indicating a system state that is a state of power at a point of the transmission and distribution system 1 to which the distributed power supply control device 6 is connected. The communication unit 51 transmits the control parameter of the power control performed by the distributed power supply control device 6 set by the control parameter setting unit 56 to the distributed power supply control device 6. In the following description, the measurement information received by the communication unit 51 from the measurement device 8 may be referred to as first measurement information, and the measurement information received by the communication unit 51 from the distributed power supply control device 6 may be referred to as second measurement information.

The recording unit 52 records facility information indicating facilities included in the transmission and distribution system 1, first measurement information received by the communication unit 51, second measurement information received by the communication unit 51, distributed power supply information received by the communication unit 51, and the like. In addition, the recording unit 52 records settings, calculation results, and the like used in the system information setting unit 53, the system disturbance setting unit 54, the system response calculation unit 55, and the control parameter setting unit 56.

The system information setting unit 53 sets a current state indicating a current operation state of the transmission and distribution system 1, on the basis of the first measurement information, the second measurement information, the distributed power supply information, and the facility information. The current state is, for example, an operation state of the transmission and distribution system 1 that changes from moment to moment, such as a voltage flow state and a power flow state of the transmission and distribution system 1.

The system disturbance setting unit 54 sets at least one system disturbance that can occur in the transmission and distribution system 1, with respect to the current state of the transmission and distribution system 1 set by the system information setting unit 53. The system disturbance is, for example, a system fault such as one or more ground faults or short circuits occurring at any position of the transmission and distribution system 1, a power supply drop which is a drop of any one or more of the large-scale power supply facilities 2, a load drop which is a drop of any one or more of the loads 3, a power supply line route interruption which is a disconnection of a transmission line on which power is transmitted, that is, a power supply line, a load line route interruption which is a disconnection of a transmission line to which power is transmitted, that is, a load line, and the like. The system disturbance also includes a multiple system disturbance including a combination of two or more of the system disturbances described above.

The system response calculation unit 55 calculates, that is, simulates, the response of the transmission and distribution system 1 before the system disturbance occurs in the transmission and distribution system 1 and response of the transmission and distribution system 1 when the system disturbance set in the system disturbance setting unit 54 occurs in the transmission and distribution system 1, and compiles the simulation results. The response of the transmission and distribution system 1 is a state of a system frequency F, an inertia center frequency, a system voltage V, a power flow, the phase angle of the generator, the frequency, the output, the load power, and the like at one or more points of the transmission and distribution system 1 before the occurrence of the system disturbance and at the time of the occurrence of the system disturbance.

The control parameter setting unit 56 sets a control parameter for controlling the power control on the distributed power supply 7 performed by the plurality of distributed power supply control devices 6, on the basis of the response of the transmission and distribution system 1 in a state where no system disturbance occurs in the transmission and distribution system 1 and the response of the transmission and distribution system 1 when the system disturbance occurs in the transmission and distribution system 1. Details of the power control of the distributed power supply 7 performed by the distributed power supply control device 6 will be described later. In the central calculation device 5, as described above, the communication unit 51 transmits the control parameter set by the control parameter setting unit 56 to the distributed power supply control device 6.

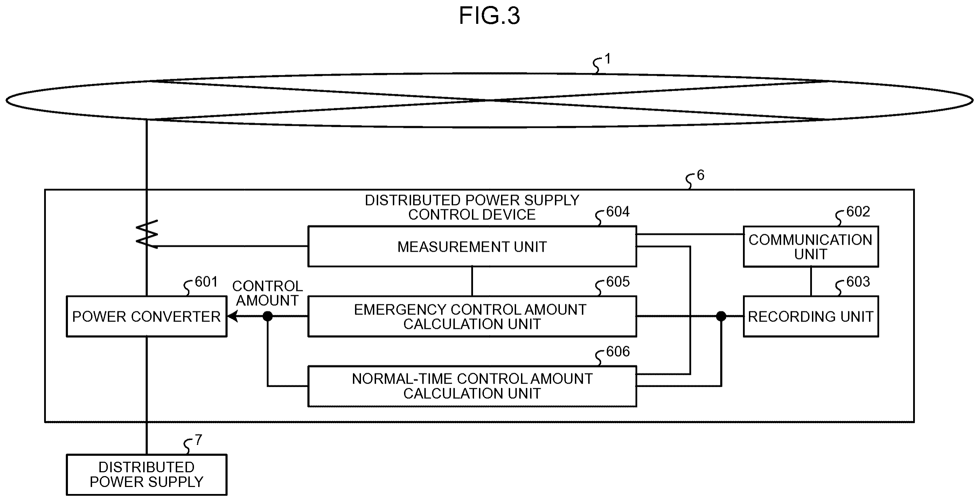

FIG. 3 is a block diagram illustrating an exemplary configuration of the distributed power supply control device 6 according to the first embodiment. As illustrated in FIG. 3, the distributed power supply control device 6 includes a power converter 601, a communication unit 602, a recording unit 603, a measurement unit 604, an emergency control amount calculation unit 605, and a normal-time control amount calculation unit 606.

The power converter 601 is a device that performs power control for interchanging power between the distributed power supply 7 and the transmission and distribution system 1. The power converter 601 performs power control to convert power supplied from the distributed power supply 7 into a form of power handled by the transmission and distribution system 1. The power converter 601 corresponds to, for example, a PV that is a DC power supply, a converter that converts DC power of a storage battery into AC, a Back-To-Back (BTB) converter for grid-connecting a variable speed wind power generator, a cyclo (registered trademark) converter included in a doubly fed induction generator, and the like.

The communication unit 602 communicates with the central calculation device 5 via a communication network. The communication unit 602 transmits, to the central calculation device 5, measurement information indicating a system state that is a state of power at a point of the transmission and distribution system 1 to which the distributed power supply control device 6 is connected, the measurement information being measured by the measurement unit 604 to be described later. In addition, the communication unit 602 transmits, to the central calculation device 5, distributed power supply information including an operation state of the distributed power supply 7 recorded in the recording unit 603 to be described later. The communication unit 602 receives a control parameter for power control performed by the distributed power supply control device 6, the control parameter being set by the central calculation device 5.

The recording unit 603 records the control parameter of the power control of the distributed power supply 7 performed by the distributed power supply control device 6, which is transmitted from the central calculation device 5 and received by the communication unit 602. In addition, the recording unit 603 stores the distributed power supply information including the operation state of the distributed power supply 7. The distributed power supply information includes, for example, a facility capacity of the distributed power supply 7, a current output state from the distributed power supply 7, a charge power amount when the distributed power supply 7 has a storage capacity, and the like.

The measurement unit 604 measures a system state which is a state of power at a point of the transmission and distribution system 1 to which the distributed power supply control device 6 is connected. The measurement unit 604 measures, as a system state, the system voltage V, the system frequency F, and a frequency change rate Rate of Change of Frequency (RoCoF) of the system frequency F at a point of the transmission and distribution system 1 to which the distributed power supply control device 6 is connected. The measurement unit 604 may measure, as the system state, a system current or the like at a point of the transmission and distribution system 1 to which the distributed power supply control device 6 is connected.

Using the measurement information measured by the measurement unit 604 and the control parameter recorded in the recording unit 603, the emergency control amount calculation unit 605 determines the presence or absence of occurrence of a system disturbance in the transmission and distribution system 1 and the type of the system disturbance when the system disturbance occurs in the transmission and distribution system 1, in accordance with a system state determination flowchart to be described later. The emergency control amount calculation unit 605 uses the control parameter to calculate an emergency control amount according to the type of system disturbance when the system disturbance occurs. The emergency control amount is a control amount in an emergency when the power converter 601 performs power control. The emergency is when a system disturbance occurs in the transmission and distribution system 1. Details of the emergency control of the emergency control amount calculation unit 605 will be described later.

Using the measurement information measured by the measurement unit 604 and the control parameter recorded in the recording unit 603, the normal-time control amount calculation unit 606 calculates a normal-time control amount in a state where no system disturbance occurs in the transmission and distribution system 1. The normal-time control amount is a control amount for the power converter 601 to perform power control. The normal time is a time when no system disturbance occurs in the transmission and distribution system 1. Details of the normal-time control of the normal-time control amount calculation unit 606 will be described later.

In the distributed power supply control device 6, the power converter 601 performs power control, using the emergency control amount calculated by the emergency control amount calculation unit 605 and the normal-time control amount calculated by the normal-time control amount calculation unit 606.

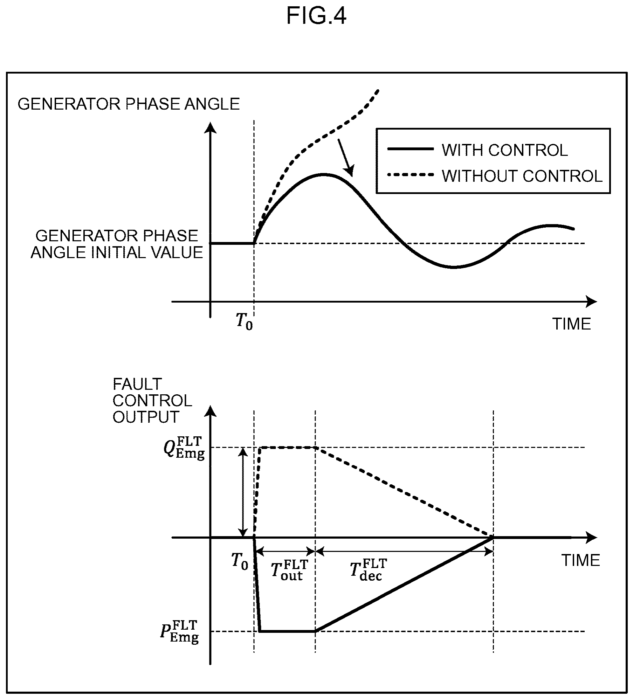

FIG. 4 is a diagram illustrating an example of a generator phase angle when a ground fault or a short circuit fault occurs in the transmission and distribution system 1 according to the first embodiment, and temporal changes of active power and reactive power output by emergency control performed by the distributed power supply control device 6 when the ground fault or the short circuit fault occurs. A ground fault, a short circuit fault, and the like may be referred to as a system fault. As illustrated in FIG. 4, a system disturbance due to a ground fault or a short circuit fault occurs at time $T_0$. The distributed power supply control device 6 measures the system state when the system disturbance occurs, and steeply changes the outputs of the active power and the reactive power to the active power $P_{Emg}^{FLT}$ and the reactive power $Q_{Emg}^{FLT}$, respectively. After continuously outputting the active power $P_{Emg}^{FLT}$ and the reactive power $Q_{Emg}^{FLT}$ only during the output duration $T_{out}^{FLT}$, the distributed power supply control device 6 applies the output reduction time $T_{dec}^{FLT}$ to reduce the control amount. The active power $P_{Emg}^{FLT}$, the reactive power $Q_{Emg}^{FLT}$, the output duration $T_{out}^{FLT}$, and the output reduction time $T_{dec}^{FLT}$ are control parameters of emergency control in the event of a ground fault or a short circuit fault. These control parameters are set by the control parameter setting unit 56 of the central calculation device 5.

The distributed power supply control device 6 may calculate the active power $P_{Emg}^{FLT}$ and the reactive power $Q_{Emg}^{FLT}$ from a function determined by the central calculation device 5 as in the following formula and the voltage drop amount $\Delta V^{FLT}$ measured by the measurement unit 604 when a system disturbance occurs. In this case, the coefficients $AP^{FLT}$ and $AQ^{FLT}$ are control parameters set by the control parameter setting unit 56 of the central calculation device 5.

$$P_{Emg}^{FLT}\left(\Delta V^{FLT}\right) = AP^{FLT} \times \Delta V^{FLT}$$

$$Q_{Emg}^{FLT}\left(\Delta V^{FLT}\right) = AQ^{FLT} \times \Delta V^{FLT}$$

Generally, the distributed power supply control in which the measured voltage and the voltage deviation $\Delta V$ from the voltage reference value are fed back has characteristics that the detection of the system disturbance is slow although the control is stable, and the distributed power supply control in which the differential amount of the voltage deviation $\Delta V$ is fed back has characteristics that the control tends to be unstable although the detection of the system disturbance is fast. The distributed power supply control device 6 performs distributed power supply control such as outputting a constant value of active power and reactive power as illustrated in FIG. 4, so that it is possible to perform control in which detection of a system disturbance is fast and stable, and contribute to improvement of stability of the transmission and distribution system 1.

In addition, it is generally known that, when a system fault occurs, the stability of the transmission and distribution system 1 is improved by increasing the active power output of the generator that tends to accelerate and further maintaining the system voltage V at a high level. Therefore, the distributed power supply control device 6 desirably absorbs active power from the transmission and distribution system 1 and injects reactive power into the transmission and distribution system 1 in emergency control when a system fault occurs. Therefore, it is desirable that the active power $P_{Emg}^{FLT}$ and the reactive power $Q_{Emg}^{FLT}$ of the emergency control are set to satisfy the above.

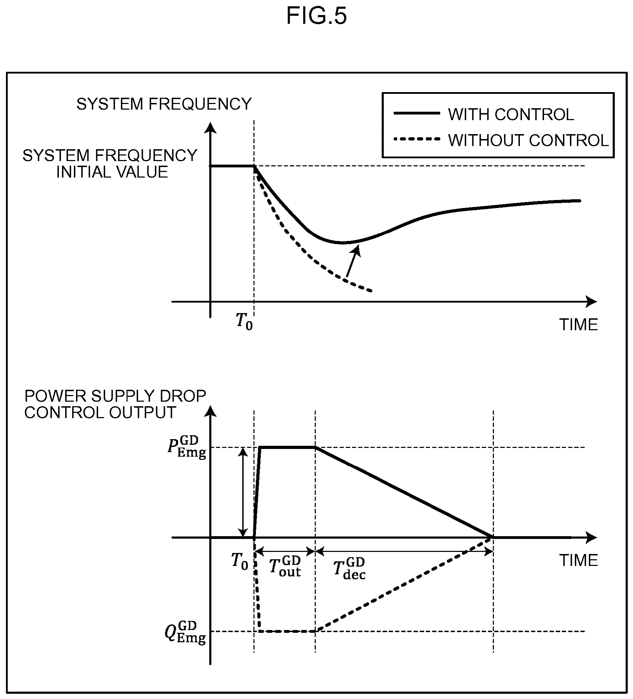

FIG. 5 is a diagram illustrating an example of temporal changes of the system frequency F when the power supply drop or the power supply line route interruption fault occurs in the transmission and distribution system 1 according to the first embodiment, and the active power and the reactive power output by the emergency control performed by the distributed power supply control device 6 when the power supply drop or the power supply line route interruption fault occurs. The target power supply is, for example, the large-scale power supply facilities 2-1 to 2-3. As illustrated in FIG. 5, a system disturbance due to a power supply drop or a power supply line route interruption fault occurs at time $T_0$. The distributed power supply control device 6 measures the system state when the system disturbance occurs, and steeply changes the outputs of the active power and the reactive power to the active power $P_{Emg}^{GD}$ and the reactive power $Q_{Emg}^{GD}$, respectively. After continuously outputting the active power $P_{Emg}^{GD}$ and the reactive power $Q_{Emg}^{GD}$ only during the output duration $T_{out}^{GD}$, the distributed power supply control device 6 applies the output reduction time $T_{dec}^{GD}$ to reduce the control amount. The active power $P_{Emg}^{GD}$, the reactive power $Q_{Emg}^{GD}$, the output duration $T_{out}^{GD}$, and the output reduction time $T_{dec}^{GD}$ are control parameters of the emergency control in the event of a power supply drop or a power supply line route interruption fault. These control parameters are set by the control parameter setting unit 56 of the central calculation device 5.

Note that the distributed power supply control device 6 may calculate the active power $P_{Emg}^{GD}$ and the reactive power $Q_{Emg}^{GD}$ from a function determined by the central calculation device 5 as in the following formula and the frequency change rate $RoCoF^{GD}$ at the time of occurrence of system disturbance measured by the measurement unit 604. In this case, the coefficients $AP^{GD}$ and $AQ^{GD}$ are control parameters set by the control parameter setting unit 56 of the central calculation device 5.

$$P_{Emg}^{GD}\left(RoCoF^{GD}\right) = AP^{GD} \times RoCoF^{GD}$$

$$Q_{Emg}^{GD}\left(RoCoF^{GD}\right) = AQ^{GD} \times RoCoF^{GD}$$

The distributed power supply control device 6 performs distributed power supply control such as outputting a constant value of active power or reactive power as illustrated in FIG. 5, so that it is possible to perform control in which detection of a system disturbance is fast and stable, and contribute to improvement of stability of the transmission and distribution system 1, as in the case of occurrence of a system fault described in FIG. 4.

In addition, it is generally known that frequency stability of the transmission and distribution system 1 is improved by compensating an insufficient active power supply amount, keeping the system voltage V low, and reducing power consumption of the load 3 at the time of occurrence of a power supply drop or a power supply line route interruption fault. This is because, since the load 3 has a voltage characteristic, the power consumption decreases as the voltage decreases. Therefore, it is desirable that the distributed power supply control device 6 injects active power into the transmission and distribution system 1 and absorbs reactive power from the transmission and distribution system 1 in emergency control when a power supply drop or a power supply line route interruption fault occurs. Therefore, it is desirable that the active power $P_{Emg}^{GD}$ and the reactive power $Q_{Emg}^{GD}$ of the emergency control are set to satisfy the above. In the following description, the power supply drop or the power supply line route interruption fault may be referred to as power supply drop or disconnection of a power supply line that is a power transmission line connected to the power supply.

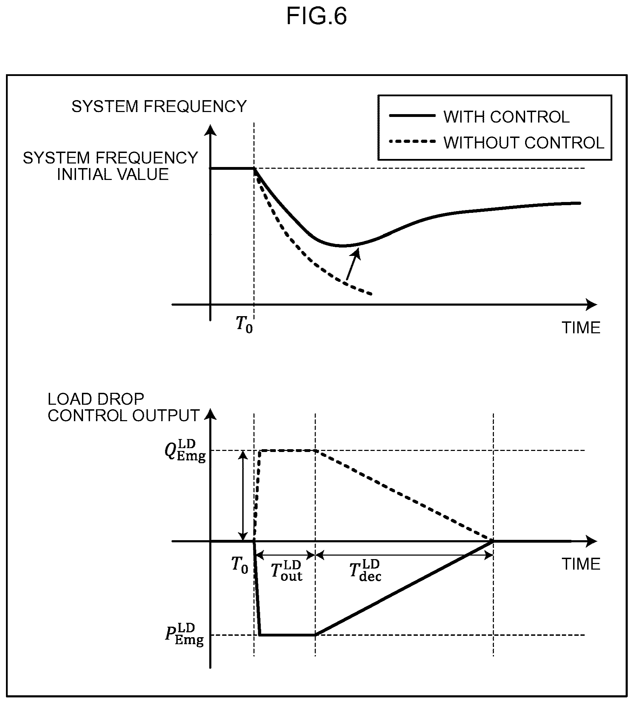

FIG. 6 is a diagram illustrating an example of temporal changes of the system frequency F when the load drop or the load line route interruption fault occurs in the transmission and distribution system 1 according to the first embodiment, and the active power and the reactive power output by the emergency control performed by the distributed power supply control device 6 when the load drop or the load line route interruption fault occurs. The target load is, for example, the loads 3-1 to 3-3. As illustrated in FIG. 6, a system disturbance due to a load drop or a load line route interruption fault occurs at time $T_0$. The distributed power supply control device 6 measures the system state when the system disturbance occurs, and steeply changes the outputs of the active power and the reactive power to the active power $P_{Emg}^{LD}$ and the reactive power $Q_{Emg}^{LD}$, respectively. After continuously outputting the active power $P_{Emg}^{LD}$ and the reactive power $Q_{Emg}^{LD}$ only during the output duration $T_{out}^{LD}$, the distributed power supply control device 6 applies the output reduction time $T_{dec}^{LD}$ to reduce the control amount. The active power $P_{Emg}^{LD}$, the reactive power $Q_{Emg}^{LD}$, the output duration $T_{out}^{LD}$, and the output reduction time $T_{dec}^{LD}$ are control parameters of emergency control when a load drop or a load line route interruption fault occurs. These control parameters are set by the control parameter setting unit 56 of the central calculation device 5.

Note that the distributed power supply control device 6 may calculate the active power $P_{Emg}^{LD}$ and the reactive power $Q_{Emg}^{LD}$ from a function determined by the central calculation device 5 as in the following formula and the frequency change rate $RoCoF^{LD}$ at the time of occurrence of system disturbance measured by the measurement unit 604. In this case, the coefficients $AP^{LD}$ and $AQ^{LD}$ are control parameters set by the control parameter setting unit 56 of the central calculation device 5.

$$P_{Emg}^{LD}(RoCoF^{LD}) = AP^{LD} \times RoCoF^{LD}$$

$$Q_{Emg}^{LD}(RoCoF^{LD}) = AQ^{LD} \times RoCoF^{LD}$$

The distributed power supply control device 6 performs distributed power supply control such as outputting a constant value of active power or reactive power as illustrated in FIG. 6, so that it is possible to perform control in which detection of a system disturbance is fast and stable, and contribute to improvement of stability of the transmission and distribution system 1, as in the case of occurrence of a system fault described in FIG. 4.

In general, it is known that frequency stability of the transmission and distribution system 1 is improved by compensating an excessive active power supply amount, keeping the system voltage V high, and increasing the power consumption of the load 3 at the time of occurrence of a load drop or a load line route interruption fault. This is because, since the load 3 has a voltage characteristic, the power consumption increases as the voltage increases. Therefore, the distributed power supply control device 6 desirably absorbs active power from the transmission and distribution system 1 and injects reactive power into the transmission and distribution system 1 in emergency control when a load drop or a load line route interruption fault occurs. Therefore, it is desirable that the active power $P_{Emg}^{LD}$ and the reactive power $Q_{Emg}^{LD}$ of the emergency control are set to satisfy the above. In the following description, a load drop or a load line route interruption fault may be referred to as a drop of the load 3 or disconnection of a load line that is a power transmission line connected to the load 3.

As illustrated in FIGS. 4 to 6, the control parameter setting unit 56 of the central calculation device 5 sets, as the power control using the emergency control amount performed by the distributed power supply control device 6, a control parameter for performing "stepwise control" and "ramp-like control", that is, allowing the distributed power supply control device 6 to output the active power having the specified first magnitude and the reactive power having the specified second magnitude for the specified first period, and thereafter change the magnitude of the active power and the magnitude of the reactive power at a constant rate so that the output becomes zero after the specified second period. As a result, the emergency control amount calculation unit 605 can control the output of the active power and the output of the reactive power as illustrated in FIGS. 4 to 6, on the basis of the control parameter set by the control parameter setting unit 56 of the central calculation device 5. In each of FIGS. 4 to 6, the intervals of the time axis may be the same or different between the upper panel and the lower panel.

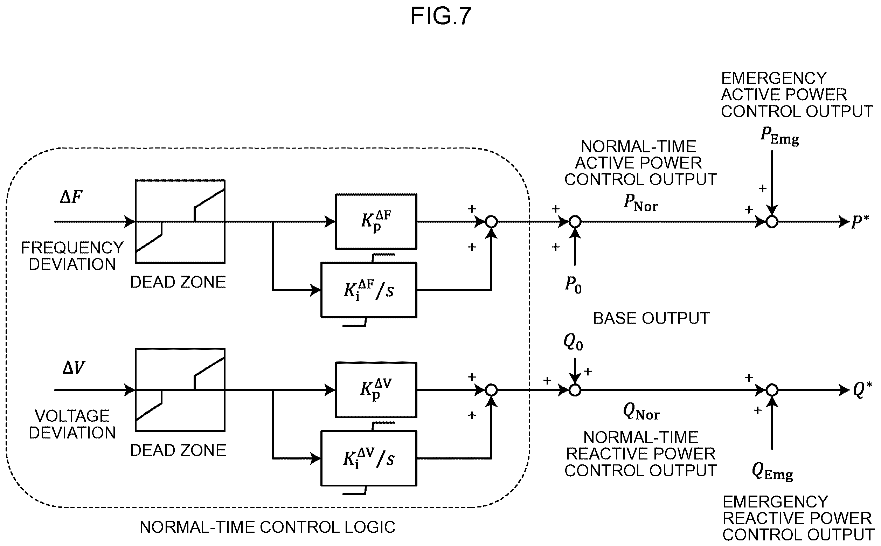

FIG. 7 is a diagram illustrating an example of a normal-time control logic implemented in the distributed power supply control device 6 according to the first embodiment. While the distributed power supply control device 6 needs to output large active power and reactive power at high speed immediately after occurrence of a system disturbance, there is a possibility that control amounts of the active power and the reactive power may not be optimal control amounts for stabilizing the transmission and distribution system 1. Therefore, in the distributed power supply control device 6, the normal-time control amount calculation unit 606 feeds back the current information of the transmission and distribution system 1 measured by the measurement unit 604, and determines outputs of the active power and the reactive power output from the distributed power supply control device 6.

As the normal-time control, the normal-time control amount calculation unit 606 performs proportional control, integral control, or both on the basis of the frequency deviation $\Delta F$ of the transmission and distribution system 1, and adds the proportional control and the integral control to the base output $P_0$ to create a normal-time active power control output $P_{Nor}$ which is an output of active power of the normal-time control. The normal-time control amount calculation unit 606 may apply a dead zone to the frequency deviation $\Delta F$. For example, when the distributed power supply 7 is PV, the base output $P_0$ may be a PV power generation amount determined by maximum power point tracking control, that is, maximum power point tracking (MPPT). The base output $P_0$ can be eliminated. The base output $P_0$ may be input from a configuration other than the normal-time control amount calculation unit 606.

Further, the normal-time control amount calculation unit 606 performs, as the normal-time control, proportional control, integral control, or both on the basis of the voltage deviation $\Delta V$ of the system voltage V of the transmission and distribution system 1 from the reference value, and adds the proportional control and the integral control to the base output $Q_0$ to create a normal-time reactive power control output $Q_{Nor}$ which is an output of reactive power of the normal-time control. The normal-time control amount calculation unit 606 may apply a dead zone to the voltage deviation $\Delta V$. The base output $Q_0$ may be, for example, a reactive power value determined by constant power factor operation when the distributed power supply 7 is a PV. The base output $Q_0$ can be eliminated. The base output $Q_0$ may be input from a configuration other than the normal-time control amount calculation unit 606.

In the normal-time control illustrated in FIG. 7, a proportional gain, an integral gain, a magnitude of a dead zone, a reference value of the system voltage V, and the like are control parameters of the normal-time control, and these control parameters are set by the control parameter setting unit 56 of the central calculation device 5.

The emergency control illustrated in FIGS. 4 to 6 is control for the distributed power supply control device 6 to output large active power and reactive power at high speed in a certain time immediately after occurrence of a system disturbance, and the normal-time control illustrated in FIG. 7 is control for the distributed power supply control device 6 to output active power and reactive power while feeding back a system state although not at high speed after a lapse of a little time from occurrence of a system disturbance. As illustrated in FIG. 7, a sum of the command value of the emergency control and the command value of the normal-time control finally becomes the command value of the control for the active power and the reactive power executed by the power converter 601. As described above, the distributed power supply control device 6 can improve the stability of the transmission and distribution system 1 at high speed and stably by combining the emergency control and the normal-time control.

In a case where the distributed power supply 7 is not a system such as a power storage device, it is conceivable that the active power cannot be absorbed. In such a case, the active power may be set to zero, and the reactive power may be controlled as described above. Further, it is conceivable that renewable energy such as PV and wind power is generally subjected to MPPT, and when the power storage device is not provided, the active power to be injected cannot be increased. In such a case, the active power may be continuously output to the maximum, that is, as is, and the reactive power may be controlled as described above.

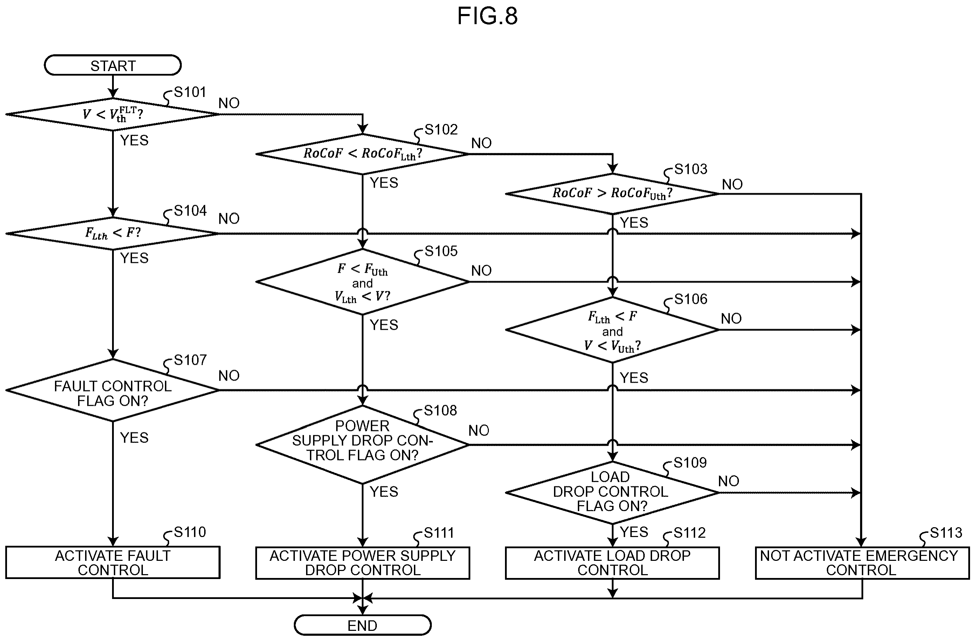

FIG. 8 is a flowchart illustrating an operation for the emergency control amount calculation unit 605 of the distributed power supply control device 6 according to the first embodiment to select the emergency control to be performed by determining whether system disturbance occurs and the type of the system disturbance when the system disturbance occurs. The flowchart illustrated in FIG. 8 is the above-described system state determination flow. The emergency control amount calculation unit 605 compares the system voltage V of the transmission and distribution system 1 with a system voltage threshold $V_{th}^{FLT}$, and determines whether a system fault has occurred based on the degree of decrease in the system voltage V of the transmission and distribution system 1 (step S101). The system voltage threshold $V_{th}^{FLT}$, which is set as a control parameter by the control parameter setting unit 56 of the central calculation device 5, is a system fault detection threshold for the system voltage V for detecting a system fault as a system disturbance. That is, the control parameter setting unit 56 of the central calculation device 5 sets the system voltage threshold $V_{th}^{FLT}$ as a control parameter. If the system voltage V of the transmission and distribution system 1<the system voltage threshold $V_{th}^{FLT}$ (step S101: Yes), that is, if the system voltage V of the transmission and distribution system 1 is less than the system voltage threshold $V_{th}^{FLT}$, the emergency control amount calculation unit 605 determines that a system fault has occurred, and proceeds to step S104. If the system voltage V of the transmission and distribution system 1≥the system voltage threshold $V_{th}^{FLT}$ (step S101: No), the emergency control amount calculation unit 605 determines that no system fault has occurred, and proceeds to step S102.

The emergency control amount calculation unit 605 compares the frequency change rate RoCoF with the frequency change rate threshold $RoCoF_{Lth}$ to determine whether a power supply drop or a power supply line route interruption fault has occurred (step S102). The frequency change rate threshold $RoCoF_{Lth}$, which is set as a control parameter by the control parameter setting unit 56 of the central calculation device 5, is a first power supply drop detection threshold for the frequency change rate RoCoF for detecting, as a system disturbance, the drop of the power supply or the disconnection of the power supply line that is a power transmission line connected to the power supply. That is, the control parameter setting unit 56 of the central calculation device 5 sets the frequency change rate threshold $RoCoF_{Lth}$ as a control parameter. If the frequency change rate RoCoF<the frequency change rate threshold $RoCoF_{Lth}$ (step S102: Yes), that is, if the frequency change rate RoCoF is less than the frequency change rate threshold $RoCoF_{Lth}$, the emergency control amount calculation unit 605 determines that a power supply drop or a power supply line route interruption fault has occurred, and proceeds to step S105. If the frequency change rate RoCoF≥the frequency change rate threshold $RoCoF_{Lth}$ (step S102: No), the emergency control amount calculation unit 605 determines that no power supply drop or power supply line route interruption fault has occurred, and proceeds to step S103.

The emergency control amount calculation unit 605 compares the frequency change rate RoCoF with the frequency change rate threshold $RoCoF_{Uth}$ to determine whether a load drop or a load line route interruption fault has occurred (step S103). The frequency change rate threshold $RoCoF_{Uth}$, which is set as a control parameter by the control parameter setting unit 56 of the central calculation device 5, is a first load drop detection threshold for the frequency change rate RoCoF for detecting, as a system disturbance, drop of the load 3 or disconnection of a load line that is a power transmission line connected to the load 3. That is, the control parameter setting unit 56 of the central calculation device 5 sets the frequency change rate threshold $RoCoF_{Uth}$ as a control parameter. If the frequency change rate RoCoF>the frequency change rate threshold $RoCoF_{Uth}$ (step S103: Yes), that is, if the frequency change rate RoCoF is larger than the frequency change rate threshold $RoCoF_{Uth}$, the emergency control amount calculation unit 605 determines that a load drop or a load line route interruption fault has occurred, and proceeds to step S106. If the frequency change rate $RoCoF \leq$ the frequency change rate threshold $RoCoF_{Uth}$ (step S103: No), the emergency control amount calculation unit 605 determines that no load drop or load line route interruption fault has occurred, and proceeds to step S113.

The emergency control amount calculation unit 605 compares the system frequency F with the system frequency threshold $F_{Lth}$ to determine whether the emergency control in the event of a system fault has a possibility of adversely affecting the system frequency F, and makes a determination not to activate the emergency control in the event of a system fault when there is a possibility of adversely affecting the system frequency F (step S104). If the system frequency threshold $F_{Lth} <$ the system frequency F (step S104: Yes), the emergency control amount calculation unit 605 determines that there is no possibility that emergency control in the event of a system fault adversely affects the system frequency F, and proceeds to step S107. If the system frequency threshold $F_{Lth} \geq$ the system frequency F (step S104: No), the emergency control amount calculation unit 605 determines that there is a possibility that emergency control in the event of a system fault adversely affects the system frequency F, and proceeds to step S113.

The emergency control amount calculation unit 605 compares the system frequency F with the system frequency threshold $F_{Uth}$ and compares the system voltage V with the system voltage threshold $V_{Lth}$ to determine whether there is a possibility that the emergency control at the time of occurrence of the power supply drop or the power supply line route interruption fault adversely affects the system frequency F and the system voltage V. In a case where there is a possibility that the emergency control adversely affects the power supply drop or the power supply line route interruption fault, the emergency control amount calculation unit performs determination for preventing the emergency control at the time of occurrence of the power supply drop or the power supply line route interruption fault from being activated (step S105). If the system frequency F< the system frequency threshold $F_{Uth}$ and the system voltage threshold $V_{Lth} <$ the system voltage V (step S105: Yes), the emergency control amount calculation unit 605 determines that there is no possibility that the emergency control at the occurrence of the power supply drop or the power supply line route interruption fault adversely affects the system frequency F and the system voltage V, and proceeds to step S108. If the system frequency F$\geq$ the system frequency threshold $F_{Uth}$ and/or the system voltage threshold $V_{Lth} \geq$ the system voltage V is satisfied (step S105: No), the emergency control amount calculation unit 605 determines that there is a possibility that the emergency control at the time of occurrence of the power supply drop or the power supply line route interruption fault adversely affects the system frequency F and the system voltage V, and proceeds to step S113.

The emergency control amount calculation unit 605 compares the system frequency F with the system frequency threshold $F_{Lth}$ and compares the system voltage V with the system voltage threshold $V_{Uth}$ to determine whether there is a possibility that the emergency control at the time of occurrence of the load drop or the load line route interruption fault adversely affects the system frequency F and the system voltage V. In a case where there is a possibility that the load drop or the load line route interruption fault adversely affects the system frequency F and the system voltage V, the emergency control amount calculation unit performs determination for preventing the emergency control at the time of occurrence of the load drop or the load line route interruption fault from being activated (step S106). If the system frequency threshold $F_{Lth} <$ the system frequency F and the system voltage V< the system voltage threshold $V_{Uth}$ (step S106: Yes), the emergency control amount calculation unit 605 determines that there is no possibility that the emergency control at the time of occurrence of the load drop or the load line route interruption fault adversely affects the system frequency F and the system voltage V, and proceeds to step S109. If the system frequency threshold $F_{Lth} \geq$ the system frequency F and/or the system voltage V$\geq$ the system voltage threshold $V_{Uth}$ is satisfied (step S106: No), the emergency control amount calculation unit 605 determines that there is a possibility that the emergency control at the time of occurrence of the load drop or the load line route interruption fault adversely affects the system frequency F and the system voltage V, and proceeds to step S113.

The emergency control amount calculation unit 605 determines whether a fault control flag, which is set for each distributed power supply control device 6 by the central calculation device 5 and indicates whether to execute emergency control in the event of a system fault, is ON (step S107). When the fault control flag is ON (step S107: Yes), the emergency control amount calculation unit 605 determines to perform emergency control in the event of a system fault, and activates the fault control (step S110). When the fault control flag is OFF (step S107: No), the emergency control amount calculation unit 605 determines not to perform emergency control in the event of a system fault, and proceeds to step S113.

The emergency control amount calculation unit 605 determines whether a power supply drop control flag, which is set for each distributed power supply control device 6 by the central calculation device 5 and indicates whether to perform emergency control in the event of a power supply drop or a power supply line route interruption fault, is ON (step S108). When the power supply drop control flag is ON (step S108: Yes), the emergency control amount calculation unit 605 determines to perform emergency control in the case of a power supply loss or a power supply line route interruption fault, and activates the power supply drop control (step S111). When the power supply drop control flag is OFF (step S108: No), the emergency control amount calculation unit 605 determines not to perform the emergency control in the event of a power supply drop or a power supply line route interruption fault, and proceeds to step S113.

The emergency control amount calculation unit 605 determines whether a load drop control flag, which is set for each distributed power supply control device 6 by the central calculation device 5 and indicates whether to perform emergency control in the event of a load drop or a load line route interruption fault, is ON (step S109). When the load drop control flag is ON (step S109: Yes), the emergency control amount calculation unit 605 determines to perform emergency control in the event of a load drop or a load line route interruption fault, and activates the load drop control (step S112). When the load drop control flag is OFF (step S109: No), the emergency control amount calculation unit 605 determines not to perform the emergency control in the event of a load drop or a load line route interruption fault, and proceeds to step S113.

In the case of step S103: No, step S104: No, step S105: No, step S106: No, step S107: No, step S108: No, or step S109: No, the emergency control amount calculation unit 605 does not activate the emergency control (Step S113).

In the following description, the fault control flag, the power supply drop control flag, and the load drop control flag may be collectively referred to as a control flag. As described above, the control parameter setting unit 56 of the central calculation device 5 sets, as the control parameter, the control flag for controlling whether the distributed power supply control device 6 performs the power control using the emergency control amount. The control parameter setting unit 56 of the central calculation device 5 can set the control flag according to the positions of the distributed power supply control device 6, the distributed power supply 7, and the like connected to the transmission and distribution system 1, the operation state of the distributed power supply 7, the positional relationship between adjacent distributed power supply control devices 6 or between adjacent distributed power supplies 7, and the like. As a result, the emergency control amount calculation unit 605 can perform control such that the power control using the emergency control amount is performed when the control flag is in an ON state, and the power control using the emergency control amount is not performed when the control flag is in an OFF state.

By repeatedly executing the flowchart illustrated in FIG. 8, the emergency control amount calculation unit 605 can appropriately determine the presence or absence of occurrence of a system disturbance and the type of the system disturbance even in a complicated system state such as a case where a multiple fault occurs in the transmission and distribution system 1, and can activate emergency control. Note that the system voltage thresholds $V_{th}^{FLT}$, $V_{Lth}$, and $V_{Uth}$, the frequency change rate thresholds $RoCoF_{Lth}$ and $RoCoF_{Uth}$, the system frequency thresholds $F_{Lth}$ and $F_{Uth}$, and the activation flag of the emergency control corresponding to the type of each system disturbance used in the description of the flowchart of FIG. 8 are control parameters set by the central calculation device 5.

In general, when active power and reactive power for the distributed power supply 7 are controlled in an emergency, the influence on the stability of the transmission and distribution system 1 changes according to the installation positions of the distributed power supply 7, the distributed power supply control device 6, and the like. For example, when a system fault occurs, the stability is improved by increasing the active power of the accelerating generator, keeping the voltage of the transmission and distribution system 1 high, reducing the power flow flowing through the transmission line, and the like. Therefore, the system stability is improved by the distributed power supply 7 near the accelerating generator absorbing or reducing the active power, the distributed power supply 7 located on the transmission side of the transmission and distribution system 1 absorbing or reducing the active power, and the like. On the other hand, the system stability is deteriorated by the distributed power supply 7 near the decelerating generator absorbing or reducing the active power, the distributed power supply 7 located on the reception side of the transmission and distribution system 1 absorbing or reducing the active power, and the like.

In addition, when a power supply drop or a power supply line route interruption fault occurs, frequency stability is improved by compensating for an insufficient supply amount of active power, keeping the voltage of the transmission and distribution system 1 low, and reducing power consumption of the load 3, and the like. Therefore, by the distributed power supply 7 located on the reception side of the transmission and distribution system 1 absorbing or reducing the active power, the power flow flowing through the transmission line increases, and the system voltage V decreases, which is effective for improving the frequency stability. On the other hand, by the distributed power supply 7 located on the transmission side of the transmission and distribution system 1 absorbing or reducing the active power, the power flow flowing through the transmission line decreases, and the system voltage V increases, which has a low effect for improving the frequency stability.

In addition, when a load drop or a load line route interruption fault occurs, frequency stability is improved by reducing an excessive supply amount of active power, increasing power consumption of the load 3 while keeping the system voltage V high, and the like. Therefore, by the distributed power supply 7 located on the reception side of the transmission and distribution system 1 injecting or increasing the active power, the power flow flowing through the transmission line decreases, and the system voltage V increases, which is effective for improving the frequency stability. On the other hand, by the distributed power supply 7 located on the transmission side of the transmission and distribution system 1 injecting or increasing the active power, the power flow flowing through the transmission line increases, and the system voltage V decreases, which has a low effect for improving the frequency stability.

Therefore, the control parameter setting unit 56 of the central calculation device 5 sets the activation flag of the emergency control according to the installation position of the distributed power supply control device 6 for each distributed power supply control device 6, and performs the emergency control only with the distributed power supply 7 effective for improving the stability of the system. As a result, the central calculation device 5 can more effectively contribute to improving the stability of the system.

The active power $P_{Emg}^{FLT}$, the reactive power $Q_{Emg}^{FLT}$, the output duration $T_{out}^{FLT}$, the output reduction time $T_{dec}^{FLT}$, the coefficient $AP^{FLT}$, the coefficient $AQ^{FLT}$, the active power $P_{Emg}^{GD}$, the reactive power $Q_{Emg}^{GD}$, the output duration $T_{out}^{GD}$, the output reduction time $T_{dec}^{GD}$, the coefficient $AP^{GD}$, the coefficient $AQ^{GD}$, the active power $P_{Emg}^{LD}$, the reactive power $Q_{Emg}^{LD}$, the output duration $T_{out}^{LD}$, the output reduction time $T_{dec}^{LD}$, the coefficient $AP^{LD}$, the coefficient $AQ^{LD}$, a proportional gain in normal-time control, an integral gain in normal-time control, a magnitude of a dead zone, a reference value of the system voltage V, the system voltage threshold $Vt_h^{FLT}$, the frequency change rate threshold $RoCoF_{Lth}$, the frequency threshold $RoCoF_{Uth}$, the system frequency threshold $F_{Lth}$, the system frequency threshold $F_{Uth}$, the system voltage threshold $V_{Lth}$, the system voltage threshold $V_{Uth}$, the system voltage threshold $V_{Uth}$, and the activation flag of emergency control are control parameters set by the control parameter setting unit 56 of the central calculation device 5.

These control parameters may be freely set by the system operator, may be set by the control parameter setting unit 56 to be effective for improving the stability of the transmission and distribution system 1 as described above on the basis of the response of the transmission and distribution system 1 before the occurrence of the system disturbance and at the occurrence of the system disturbance calculated by the system response calculation unit 55, may be set by the control parameter setting unit 56 by performing optimization calculation, or may be set by the control parameter setting unit 56 by using a machine learning method.

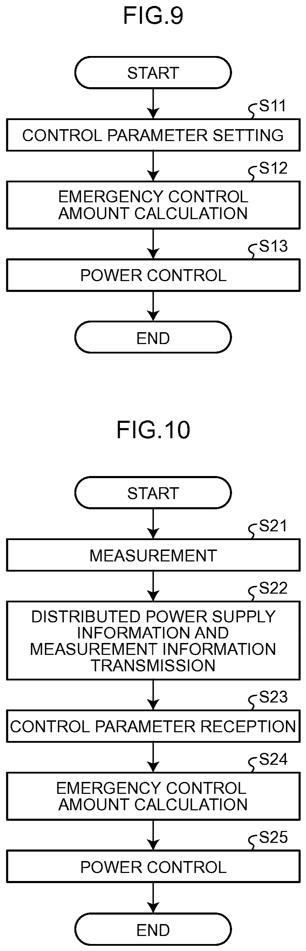

The operation of the distributed power supply control system 4 will be described. FIG. 9 is a flowchart illustrating the operation of the distributed power supply control system 4 according to the first embodiment. In the distributed power supply control system 4, the central calculation device 5 sets a control parameter of power control performed by a plurality of distributed power supply control devices 6 each connected to a corresponding one of different distributed power supplies 7, the power control being performed on power supplied from the distributed power supply 7 (step S11). The distributed power supply control device 6 measures a system state which is a state of power at a point of the connected transmission and distribution system 1, calculates an emergency control amount according to a type of a system disturbance by using measurement information on the system state and the control parameter when the system disturbance occurs in the transmission and distribution system 1 (step S12), and performs the power control (step S13). Note that the operation of the distributed power supply control system 4 described above is a basic operation, and the distributed power supply control system 4 can perform an operation other than the operation illustrated in FIG. 9. For example, in the distributed power supply control system 4, in a case where the control parameter is set by default, the distributed power supply control device 6 can perform power control by calculating the emergency control amount even without the control parameter set from the central calculation device 5.

The operation of the distributed power supply control device 6 will be described. FIG. 10 is a flowchart illustrating the operation of the distributed power supply control device 6 according to the first embodiment. In the distributed power supply control device 6, the measurement unit 604 measures a system state which is a state of power at a point of the transmission and distribution system 1 to which the distributed power supply control device 6 is connected (step S21). The communication unit 602 transmits, to the central calculation device 5, the distributed power supply information including the operation state of the distributed power supply 7 and the measurement information indicating the system state measured by the measurement unit 604 (step S22), and receives the control parameter of the power control set by the central calculation device 5 from the central calculation device 5 (step S23). The emergency control amount calculation unit 605 uses the measurement information and the control parameter to determine the presence or absence of occurrence of a system disturbance in the transmission and distribution system 1 and the type of the system disturbance when the system disturbance occurs in the transmission and distribution system 1, and calculates an emergency control amount according to the type of the system disturbance when the system disturbance occurs, the emergency control amount being a control amount for the power converter 601 to perform power control (step S24). The power converter 601 performs power control to convert the power supplied from the distributed power supply 7 into the form of power handled by the transmission and distribution system 1, using the emergency control amount (step S25). Note that the operation of the distributed power supply control device 6 described above is a basic operation, and the distributed power supply control device 6 can perform an operation other than the operation illustrated in FIG. 10. For example, as in the case of FIG. 9, in a case where the control parameter is set by default, the distributed power supply control device 6 can perform power control by calculating the emergency control amount even without the control parameter set from the central calculation device 5.

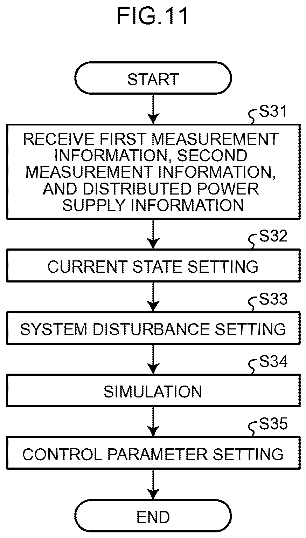

The operation of the central calculation device 5 will be described. FIG. 11 is a flowchart illustrating the operation of the central calculation device 5 according to the first embodiment. In the central calculation device 5, the communication unit 51 receives, from the measurement device 8 connected to the transmission and distribution system 1, first measurement information indicating a system state which is a state of power of the transmission and distribution system 1 measured by the measurement device 8, and receives, from a plurality of distributed power supply control devices 6 each connected to a corresponding one of different distributed power supplies 7, distributed power supply information including an operation state of the distributed power supply 7 and second measurement information indicating a system state which is a state of power at a point of the transmission and distribution system 1 to which the distributed power supply control device 6 is connected (step S31). The system information setting unit 53 sets the current state indicating the current operation state of the transmission and distribution system 1, on the basis of the first measurement information, the second measurement information, the distributed power supply information, and the facility information indicating the facility included in the transmission and distribution system 1 (step S32). The system disturbance setting unit 54 sets a system disturbance that can occur in the transmission and distribution system 1, with respect to the current state of the transmission and distribution system 1 (step S33). The system response calculation unit 55 simulates the response of the transmission and distribution system 1 before the system disturbance occurs in the transmission and distribution system 1 and the response of the transmission and distribution system 1 when the system disturbance set in the system disturbance setting unit 54 occurs in the transmission and distribution system 1 (step S34). The control parameter setting unit 56 sets a control parameter for controlling the power control on the distributed power supply 7 performed by the plurality of distributed power supply control devices 6, on the basis of the response of the transmission and distribution system 1 in a state where no system disturbance occurs in the transmission and distribution system 1 and the response of the transmission and distribution system 1 when the system disturbance occurs in the transmission and distribution system 1 (step S35).

Next, hardware configurations of the distributed power supply control device 6 according to the first embodiment will be described. In the distributed power supply control device 6, the power converter 601 is a device such as a converter. The communication unit 602 is a communication device. The recording unit 603 is a memory. The measurement unit 604 is a sensor. The emergency control amount calculation unit 605 and the normal-time control amount calculation unit 606 are implemented by processing circuitry. The processing circuitry may be a memory storing a program and a processor that executes a program stored in the memory, or may be dedicated hardware. The processing circuitry is also called a control circuit.

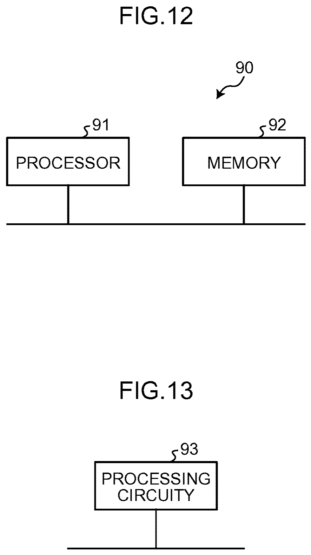

FIG. 12 is a diagram illustrating an exemplary configuration of processing circuitry 90 in the case that the processing circuitry that implements the distributed power supply control device 6 according to the first embodiment is implemented by a processor 91 and a memory 92. The processing circuitry 90 illustrated in FIG. 12 is a control circuit and includes the processor 91 and the memory 92. In a case where the processing circuitry 90 is configured with the processor 91 and the memory 92, each function of the processing circuitry 90 is implemented by software, firmware, or a combination of software and firmware. Software or firmware is described as a program and stored in the memory 92. In the processing circuitry 90, the processor 91 reads and executes the program stored in the memory 92, thereby implementing each function. That is, the processing circuitry 90 includes the memory 92 for storing a program that results in the processing of the distributed power supply control device 6. It can also be said that this program is a program for being executed by the distributed power supply control device 6 implemented by the processing circuitry 90. This program may be provided by a storage medium in which the program is stored, or may be provided by other means such as a communication medium.

The processor 91 is exemplified by a central processing unit (CPU), a processing device, an arithmetic device, a microprocessor, a microcomputer, or a digital signal processor (DSP). Examples of the memory 92 include a non-volatile or volatile semiconductor memory, a magnetic disk, a flexible disk, an optical disc, a compact disc, a mini disc, a digital versatile disc (DVD), and the like. Examples of non-volatile or volatile semiconductor memories include a random access memory (RAM), a read only memory (ROM), a flash memory, an erasable programmable ROM (EPROM), an electrically EPROM (EEPROM, registered trademark), and the like.

FIG. 13 is a diagram illustrating an exemplary configuration of processing circuitry 93 in the case that the processing circuitry that implements the distributed power supply control device 6 according to the first embodiment is implemented by dedicated hardware. For example, the processing circuitry 93 illustrated in FIG. 13 is a single circuit, a composite circuit, a programmed processor, a parallel programmed processor, an application specific integrated circuit (ASIC), a field programmable gate array (FPGA), or a combination thereof. The processing circuitry 93 may be partially implemented by dedicated hardware, and partially implemented by software or firmware. In this manner, the processing circuitry 93 can implement the above-described functions using dedicated hardware, software, firmware, or a combination thereof.

Although the hardware configuration of the distributed power supply control device 6 has been described, the hardware configuration of the central calculation device 5 is similar. In the central calculation device 5, the communication unit 51 is a communication device. The recording unit 52 is a memory. The system information setting unit 53, the system disturbance setting unit 54, the system response calculation unit 55, and the control parameter setting unit 56 are implemented by processing circuitry. The processing circuitry may be a memory storing a program and a processor that executes a program stored in the memory, or may be dedicated hardware. The processing circuitry is also called a control circuit.

As described above, according to the present embodiment, the distributed power supply control system 4 detects the presence or absence of occurrence of a system disturbance and the type of the system disturbance at the installation position of the distributed power supply control device 6 at high speed, and performs high-speed and highly stable emergency control and normal-time control capable of feeding back the system state although not at high speed. As a result, the distributed power supply control system 4 can improve the stability of the transmission and distribution system 1, that is, the power system 100 at the time of occurrence of a system disturbance, and contribute to the avoidance of a large-scale power failure. Furthermore, in the central calculation device 5, by setting the activation flag of the emergency control and the parameters of the emergency control and the normal-time control according to the installation position of the distributed power supply control device 6, the effect of improving the stability of the transmission and distribution system 1, that is, the power system 100, can be enhanced.

In addition, the distributed power supply control system 4 can appropriately control a system disturbance not accompanied by a voltage drop, for example, a frequency fluctuation accompanying a power supply drop or a load drop, and can appropriately control a system fault, a power supply drop, a load drop, and a complex system disturbance consisting of a combination thereof. In addition, when a system disturbance occurs, the distributed power supply control system 4 can perform different power control by the distributed power supply control device 6 by consideration of the influence, contribution, and the like on the system stability according to the installation positions of the distributed power supply control device 6, the distributed power supply 7, and the like in the transmission and distribution system 1.

Second Embodiment.

In the second embodiment, a modification of the operation of the emergency control amount calculation unit 605 of the distributed power supply control device 6 illustrated in FIG. 8 described in the first embodiment will be described.

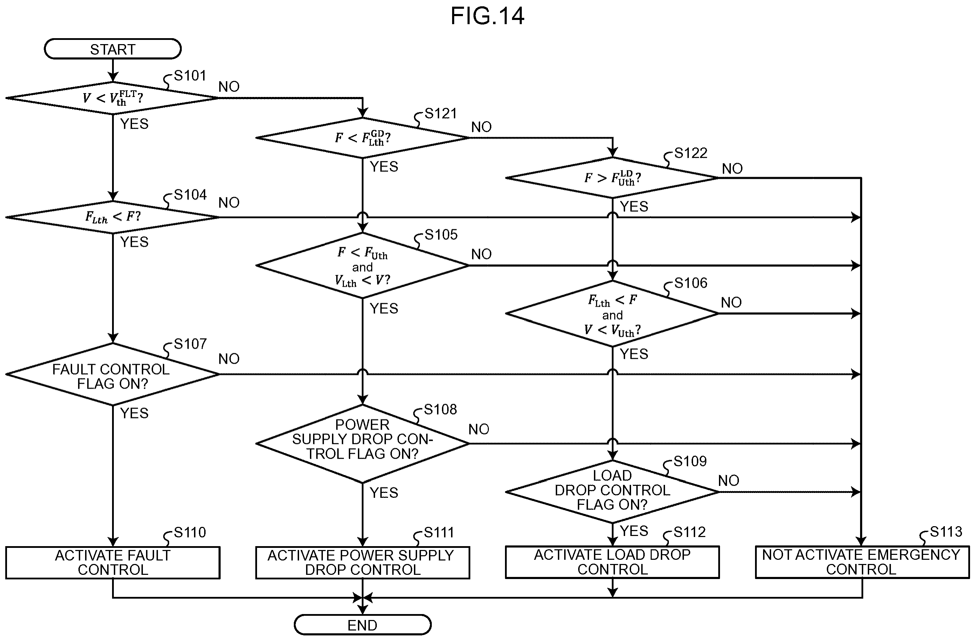

A first modification will be described. FIG. 14 is a first flowchart illustrating an operation for the emergency control amount calculation unit 605 of the distributed power supply control device 6 according to the second embodiment to select the emergency control to be performed by determining whether system disturbance occurs and the type of the system disturbance when the system disturbance occurs. In the flowchart illustrated in FIG. 14, the operation in step S101 is the same as the operation in step S101 in the flowchart illustrated in FIG. 8. However, in the flowchart illustrated in FIG. 14, in the case of step S101: No, the process proceeds to step S121.

The emergency control amount calculation unit 605 compares the system frequency F with the system frequency threshold $F_{Lth}^{GD}$ to determine whether a power supply drop or a power supply line route interruption fault has occurred (step S121). The system frequency threshold $F_{Lth}^{GD}$, which is set as a control parameter by the control parameter setting unit 56 of the central calculation device 5, is a second power supply drop detection threshold for the system frequency F for detecting, as a system disturbance, the drop of the power supply or the disconnection of the power supply line that is a power transmission line connected to the power supply. That is, the control parameter setting unit 56 of the central calculation device 5 sets the system frequency threshold $F_{Lth}^{GD}$ as a control parameter. If the system frequency F<the system frequency threshold $F_{Lth}^{GD}$ (step S121: Yes), that is, if the system frequency F is less than the system frequency threshold $F_{Lth}^{GD}$, the emergency control amount calculation unit 605 determines that a power supply drop or a power supply line route interruption fault has occurred, and proceeds to step S105. If the system frequency F≥the system frequency threshold $F_{Lth}^{GD}$ (step S121: No), the emergency control amount calculation unit 605 determines that no power supply drop or power supply line route interruption fault has occurred, and proceeds to step S122.

The emergency control amount calculation unit 605 compares the system frequency F with the system frequency threshold $F_{Uth}^{LD}$ to determine whether a load drop or a load line route interruption fault has occurred (step S122). The system frequency threshold $F_{Uth}^{LD}$, which is set as a control parameter by the control parameter setting unit 56 of the central calculation device 5, is a second load drop detection threshold for the system frequency F for detecting, as a system disturbance, the drop of the load 3 or the disconnection of the load line, which is a power transmission line connected to the load 3. That is, the control parameter setting unit 56 of the central calculation device 5 sets the system frequency threshold $F_{Uth}^{LD}$ as a control parameter. If the system frequency F>the system frequency threshold $F_{Uth}^{LD}$ (step S122: Yes), that is, if the system frequency F is larger than the system frequency threshold $F_{Uth}^{LD}$, the emergency control amount calculation unit 605 determines that a load drop or a load line route interruption fault has occurred, and proceeds to step S106. If the system frequency F≤the system frequency threshold $F_{Uth}^{LD}$ (step S122: No), the emergency control amount calculation unit 605 determines that no load drop or load line route interruption fault has occurred, and proceeds to step S113.

Subsequent operations are similar to steps S104 to S113 in the flowchart illustrated in FIG. 8. As described above, even when the system frequency F is used instead of the frequency change rate RoCoF of the first embodiment, the emergency control amount calculation unit 605 can obtain an effect similar to that in the first embodiment.

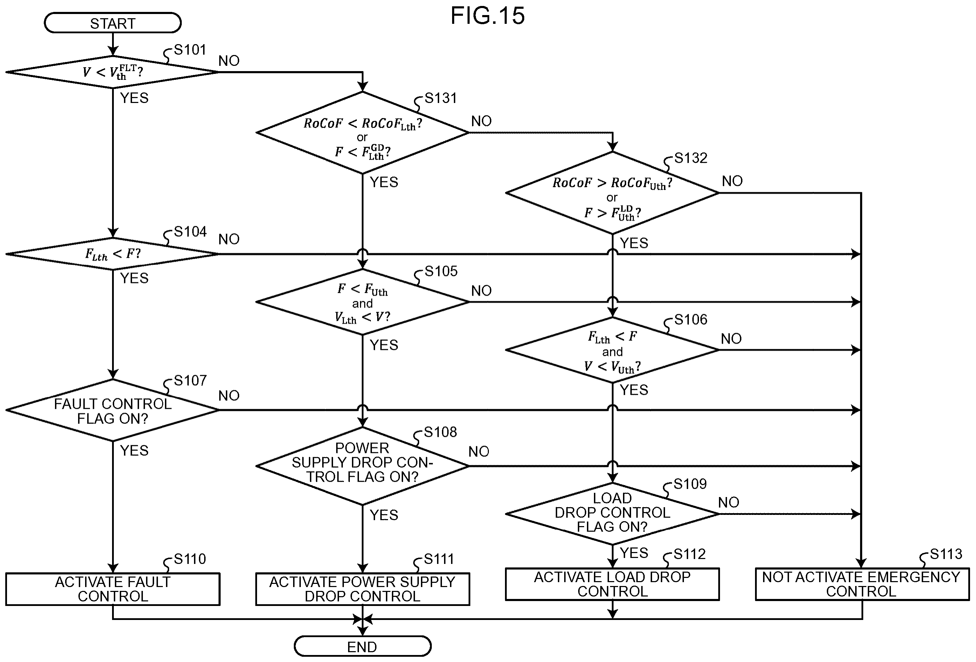

A second modification will be described. FIG. 15 is a second flowchart illustrating an operation for the emergency control amount calculation unit 605 of the distributed power supply control device 6 according to the second embodiment to select the emergency control to be performed by determining whether system disturbance occurs and the type of the system disturbance when the system disturbance occurs. In the flowchart illustrated in FIG. 15, the operation in step S101 is the same as the operation in step S101 in the flowchart illustrated in FIG. 8. However, in the flowchart illustrated in FIG. 15, in the case of step S101: No, the process proceeds to step S131.

The emergency control amount calculation unit 605 compares the frequency change rate RoCoF with the frequency change rate threshold $RoCoF_{Lth}$, and further compares the system frequency F with the system frequency threshold $F_{Lth}^{GD}$ to determine whether a power supply drop or a power supply line route interruption fault has occurred (step S131). If the frequency change rate RoCoF<the frequency change rate threshold $RoCoF_{Lth}$ and/or the system frequency F<the system frequency threshold $F_{Lth}^{GD}$ is satisfied (step S131: Yes), the emergency control amount calculation unit 605 determines that a power supply drop or a power supply line route interruption fault has occurred, and proceeds to step S105. If the frequency change rate RoCoF<the frequency change rate threshold $RoCoF_{Lth}$ and/or the system frequency F<the system frequency threshold $F_{Lth}^{GD}$ is not satisfied (step S131: No), the emergency control amount calculation unit 605 determines that no power supply drop or power supply line route interruption fault has occurred, and proceeds to step S132. The control parameter setting unit 56 of the central calculation device 5 only needs to set the frequency change rate threshold $RoCoF_{Lth}$ and/or the system frequency threshold $F_{Lth}^{GD}$. As described above, when the frequency change rate RoCoF being less than the frequency change rate threshold $RoCoF_{Lth}$ and/or the system frequency F being less than the system frequency threshold $F_{Lth}^{GD}$ is satisfied, the emergency control amount calculation unit 605 can determine that a power supply drop or a disconnection of the power supply line has occurred.

The emergency control amount calculation unit 605 compares the frequency change rate RoCoF with the frequency change rate threshold $RoCoF_{Uth}$, and further compares the system frequency F with the system frequency threshold $F_{Uth}^{LD}$ to determine whether a load drop or a load line route interruption fault has occurred (step S132). If the frequency change rate RoCoF>the frequency change rate threshold $RoCoF_{Uth}$ and/or the system frequency F>the system frequency threshold $F_{Uth}^{LD}$ is satisfied (step S132: Yes), the emergency control amount calculation unit 605 determines that a load drop or a load line route interruption fault has occurred, and proceeds to step S106. If the frequency change rate RoCoF>the frequency change rate threshold $RoCoF_{Uth}$ and/or the system frequency F>the system frequency threshold $F_{Uth}^{LD}$ is not satisfied (step S132: No), the emergency control amount calculation unit 605 determines that no load drop or load line route interruption fault has occurred, and proceeds to step S113. The control parameter setting unit 56 of the central calculation device 5 only needs to set the frequency change rate threshold $RoCoF_{Uth}$ and/or the system frequency threshold $F_{Uth}^{LD}$. As described above, when the frequency change rate RoCoF being larger than the frequency change rate threshold $RoCoF_{Uth}$ and/or the system frequency F being larger than the system frequency threshold $F_{Uth}^{LD}$ is satisfied, the emergency control amount calculation unit 605 can determine that a drop of the load 3 or a disconnection of the load line has occurred.

Subsequent operations are similar to steps S104 to S113 in the flowchart illustrated in FIG. 8. As described above, by using the system frequency F in addition to the frequency change rate RoCoF of the first embodiment, the emergency control amount calculation unit 605 can determine the presence or absence of occurrence of a system disturbance with higher accuracy and determine the type of the system disturbance at the time of occurrence of the system disturbance with higher accuracy than in the first embodiment.

A third modification will be described. Even in a case where there is no occurrence of power supply drop, load drop, or the like, and only a system fault occurs, if a large frequency fluctuation occurs, there is a possibility that control against either power supply drop or load drop is activated. Therefore, for a certain period of time after occurrence of a system fault, processing of not activating the power supply drop control and the load drop control or adjusting a detection threshold for activating the power supply drop control and the load drop control may be added. Hereinafter, the power supply drop control and the load drop control are collectively referred to as power supply load drop control.

In the distributed power supply control device 6, an adjustment flag of the power supply load drop control is provided, the adjustment flag of the power supply load drop control is turned off in normal times, and the adjustment flag of the power supply load drop control is turned on when a certain condition is satisfied. The condition under which the adjustment flag is turned on is, for example, a case where the occurrence of a fault is detected in the central calculation device 5 from the wide-area measurement information, the operation information of the protective relay, and the like. At that time, the central calculation device 5 transmits a signal for setting the adjustment flag to ON to the distributed power supply control device 6, and the distributed power supply control device 6 turns on the adjustment flag for a certain period after receiving the signal from the central calculation device 5. As another condition, for example, the distributed power supply control device 6 may turn on the adjustment flag of the power supply load drop control for a certain period after the activation of the fault control, or may turn on the adjustment flag of the power supply load drop control for a certain period when the voltage phase angle of the measurement information of the distributed power supply control device 6, the system frequency F of the transmission and distribution system 1, the frequency change rate RoCoF of the transmission and distribution system 1, or the like vibrates up and down. When a system fault occurs far from the position of a certain distributed power supply control device 6, the voltage phase angle, the system frequency F of the transmission and distribution system 1, the frequency change rate RoCoF of the transmission and distribution system 1, and the like may greatly vibrate up and down even without a significant decrease in the voltage of the transmission and distribution system 1. Therefore, when detecting the vertical vibration in the voltage phase angle, the system frequency F of the transmission and distribution system 1, the frequency change rate RoCoF of the transmission and distribution system 1, and the like, the distributed power supply control device 6 sets the adjustment flag of the power supply load drop control of the distributed power supply control device 6 to ON for a certain period. That is, the control parameter setting unit 56 of the central calculation device 5 or the emergency control amount calculation unit 605 of the distributed power supply control device 6 sets, as a control parameter, the adjustment flag of the power supply load drop control to an ON state, the adjustment flag preventing the distributed power supply control device 6 from detecting a type other than a system fault as a system disturbance in a prescribed period after a system fault occurs in the transmission and distribution system 1. In the following description, the adjustment flag of the power supply load drop control may be simply referred to as the adjustment flag.

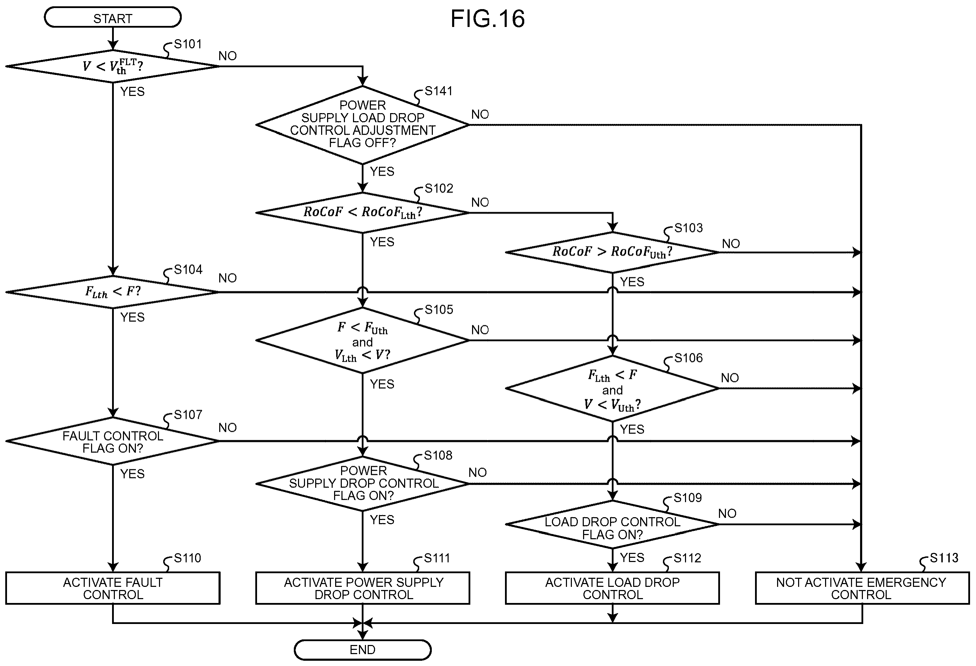

FIG. 16 is a third flowchart illustrating an operation for the emergency control amount calculation unit 605 of the distributed power supply control device 6 according to the second embodiment to select the emergency control to be performed by determining whether system disturbance occurs and the type of the system disturbance when the system disturbance occurs. In the flowchart illustrated in FIG. 16, the operation in step S101 is the same as the operation in step S101 in the flowchart illustrated in FIG. 8. However, in the flowchart illustrated in FIG. 16, in the case of step S101: No, the process proceeds to step S141.

The emergency control amount calculation unit 605 determines whether to perform the power supply drop control and the load drop control through ON or OFF of the adjustment flag of the power supply load drop control (step S141). When the adjustment flag of the power supply load drop control is OFF (step S141: Yes), the emergency control amount calculation unit 605 determines to perform the power supply drop control or the load drop control when the above-described condition is satisfied, and proceeds to step S102. When the adjustment flag of the power supply load drop control is ON (step S141: No), the emergency control amount calculation unit 605 determines not to activate the power supply drop control and the load drop control regardless of the above-described condition, and proceeds to step S113. As described above, the emergency control amount calculation unit 605 does not detect a type other than a system fault as a system disturbance when the adjustment flag of the power supply load drop control is in the ON state.

Subsequent operations are similar to steps S104 to S113 in the flowchart illustrated in FIG. 8. As described above, the emergency control amount calculation unit 605 can perform the emergency control according to the system state of the transmission and distribution system 1 by using the adjustment flag of the power supply load drop control.

The third modification can be applied to the first modification and the second modification. That is, the portions of steps S102 and S103 illustrated in FIG. 16 may be replaced with steps S121 and S122 illustrated in FIG. 14, or may be replaced with steps S131 and S132 illustrated in FIG. 15.

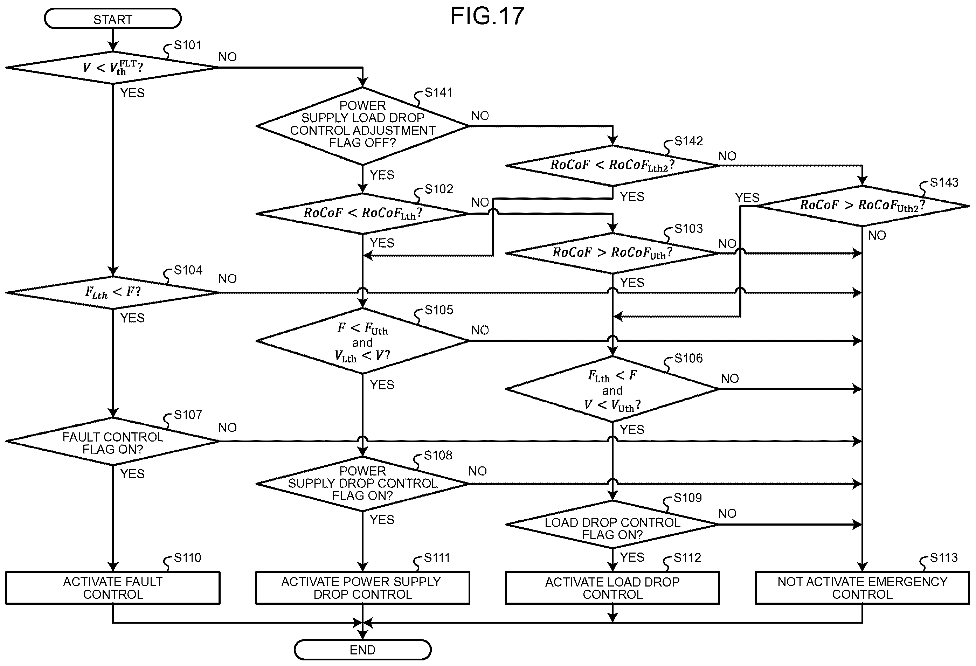

A fourth modification will be described. FIG. 17 is a fourth flowchart illustrating an operation for the emergency control amount calculation unit 605 of the distributed power supply control device 6 according to the second embodiment to select the emergency control to be performed by determining whether system disturbance occurs and the type of the system disturbance when the system disturbance occurs. In the flowchart illustrated in FIG. 17, the operation in step S141 is the same as the operation in step S141 in the flowchart illustrated in FIG. 16. However, in the flowchart illustrated in FIG. 17, in the case of step S141: No, the process proceeds to step S142. The operation in step S141 of the flowchart illustrated in FIG. 17 corresponds to the operation of changing the activation determination threshold of the power supply drop control and the load drop control through ON or OFF of the adjustment flag of the power supply load drop control.

The emergency control amount calculation unit 605 compares the frequency change rate RoCoF with the frequency change rate threshold $RoCoF_{Lth2}$ to determine whether a power supply drop or a power supply line route interruption fault has occurred (step S142). The frequency change rate threshold value $RoCoF_{Lth2}$ is set to a value smaller than the frequency change rate threshold value $RoCoF_{Lth}$, but is not limited thereto. If the frequency change rate $RoCoF <$ the frequency change rate threshold $RoCoF_{Lth2}$ (step S142: Yes), the emergency control amount calculation unit 605 determines that a power supply drop or a power supply line route interruption fault has occurred, and proceeds to step S105. If the frequency change rate $RoCoF \geq$ the frequency change rate threshold $RoCoF_{Lth2}$ (step S142: No), the emergency control amount calculation unit 605 determines that no power supply drop or power supply line route interruption fault has occurred, and proceeds to step S143.

The emergency control amount calculation unit 605 compares the frequency change rate $RoCoF$ with the frequency change rate threshold $RoCoF_{Uth2}$ to determine whether a load drop or a load line route interruption fault has occurred (step S143). The frequency change rate threshold value $RoCoF_{Uth2}$ is set to a value larger than the frequency change rate threshold value $RoCoF_{Uth}$, but is not limited thereto. If the frequency change rate $RoCoF >$ the frequency change rate threshold $RoCoF_{Uth2}$ (step S143: Yes), the emergency control amount calculation unit 605 determines that a load drop or a load line route interruption fault has occurred, and proceeds to step S106. If the frequency change rate $RoCoF \leq$ the frequency change rate threshold $RoCoF_{Uth2}$ (step S143: No), the emergency control amount calculation unit 605 determines that no load drop or load line route interruption fault has occurred, and proceeds to step S113.

Subsequent operations are similar to steps S104 to S113 in the flowchart illustrated in FIG. 8. As described above, the emergency control amount calculation unit 605 can change the activation determination thresholds of the power supply drop control and the load drop control by using the adjustment flag of the power supply load drop control, and can perform the emergency control according to the system state of the transmission and distribution system 1.

The fourth modification can be applied to the first modification and the second modification. That is, the portions of steps S102 and S103 illustrated in FIG. 17 may be replaced with steps S121 and S122 illustrated in FIG. 14, or may be replaced with steps S131 and S132 illustrated in FIG. 15. In addition, the portions of steps S142 and S143 may be comparing the system frequency F with the threshold value for the system frequency F, or may be combining the current contents of steps S142 and S143 with comparing the system frequency F with the threshold value for the system frequency F.

For example, the control parameter setting unit 56 of the central calculation device 5 or the emergency control amount calculation unit 605 of the distributed power supply control device 6 sets, as a control parameter, the adjustment flag of the power supply load drop control to an ON state, the adjustment flag preventing the distributed power supply control device 6 from using the first power supply drop detection threshold and the second power supply drop detection threshold in a prescribed period after a system fault occurs in the transmission and distribution system 1. In addition, the control parameter setting unit 56 of the central calculation device 5 sets, as control parameters, a third power supply drop detection threshold for the frequency change rate $RoCoF$ and/or a fourth power supply drop detection threshold for the system frequency F for detecting the drop of the power supply or the disconnection of the power supply line. In this case, in a case where the adjustment flag of the power supply load drop control is in the ON state, the emergency control amount calculation unit 605 can determine that the drop of the power supply or the disconnection of the power supply line has occurred when the frequency change rate $RoCoF$ being less than the third power supply drop detection threshold and/or the system frequency F being less than the fourth power supply drop detection threshold is satisfied.

In addition, the control parameter setting unit 56 of the central calculation device 5 or the emergency control amount calculation unit 605 of the distributed power supply control device 6 sets, as a control parameter, the adjustment flag of the power supply load drop control to an ON state, the adjustment flag preventing the distributed power supply control device 6 from using the first load drop detection threshold and the second load drop detection threshold in a prescribed period after a system fault occurs in the transmission and distribution system 1. In addition, the control parameter setting unit 56 of the central calculation device 5 sets, as control parameters, a third load drop detection threshold for the frequency change rate $RoCoF$ and/or a fourth load drop detection threshold for the system frequency F for detecting the drop of the load 3 or the disconnection of the load line. In this case, in a case where the adjustment flag of the power supply load drop control is in the ON state, the emergency control amount calculation unit 605 can determine that the drop of the load 3 or the disconnection of the load line has occurred when the frequency change rate $RoCoF$ being larger than the third load drop detection threshold and/or the system frequency F being larger than the fourth load drop detection threshold is satisfied.

In the second embodiment, the flowcharts illustrated in FIGS. 14 to 17 are the above-described system state determination flow.

Third Embodiment.

In the third embodiment, a case where a control amount for the power converter 601 of the distributed power supply control device is corrected will be described.

The configuration of the power system 100 in the third embodiment is similar to the configuration of the power system 100 in the first embodiment illustrated in FIG. 1. However, in the third embodiment, as will be described later, the central calculation device 5 illustrated in FIG. 1 will be described as a central calculation device 5a, and the distributed power supply control device 6 will be described as a distributed power supply control device 6a.

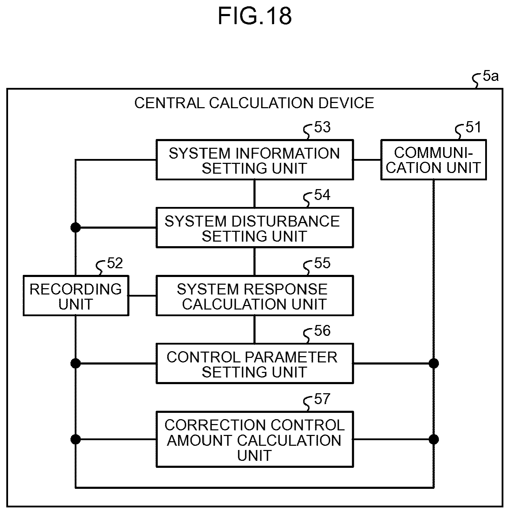

FIG. 18 is a block diagram illustrating an exemplary configuration of the central calculation device 5a according to the third embodiment. As illustrated in FIG. 18, the central calculation device 5a is obtained by adding a correction control amount calculation unit 57 to the central calculation device 5 of the first embodiment illustrated in FIG. 2. When a system disturbance occurs in the transmission and distribution system 1, the central calculation device 5a receives information on the system disturbance by the communication unit 51. Based on the system disturbance information received by the communication unit 51, the correction control amount calculation unit 57 calculates a correction control amount for the distributed power supply control device 6a to perform power control, and outputs the correction control amount to the distributed power supply control device 6a through the communication unit 51. The correction control amount is calculated on a per distributed-power-supply-control-device 6a basis.

For a method of calculating the correction control amount for each distributed power supply control device 6a, for example, the correction control amount calculation unit 57 calculates the active power and the reactive power of the distributed power supply 7 necessary for stabilizing the transmission and distribution system 1 by calculating the system response at the time of occurrence of the system disturbance by gradually changing the active power and the reactive power of the distributed power supply 7 with respect to the system disturbance set by the system disturbance setting unit 54. The correction control amount calculation unit 57 may set the method of calculating the correction control amount for each distributed power supply control device 6a by performing optimization calculation, by using a machine learning method, or by receiving manual operation from an operator of the distributed power supply control system 4. In addition, the correction control amount calculation unit 57 may create a table indicating the correspondence between the system disturbance assumed before the occurrence of the system disturbance and the correction control amount of the distributed power supply control device 6a with respect to the system disturbance by the above-described method, and select the correction control amount calculated in advance with respect to the system disturbance from the above-described table when the system disturbance occurs.

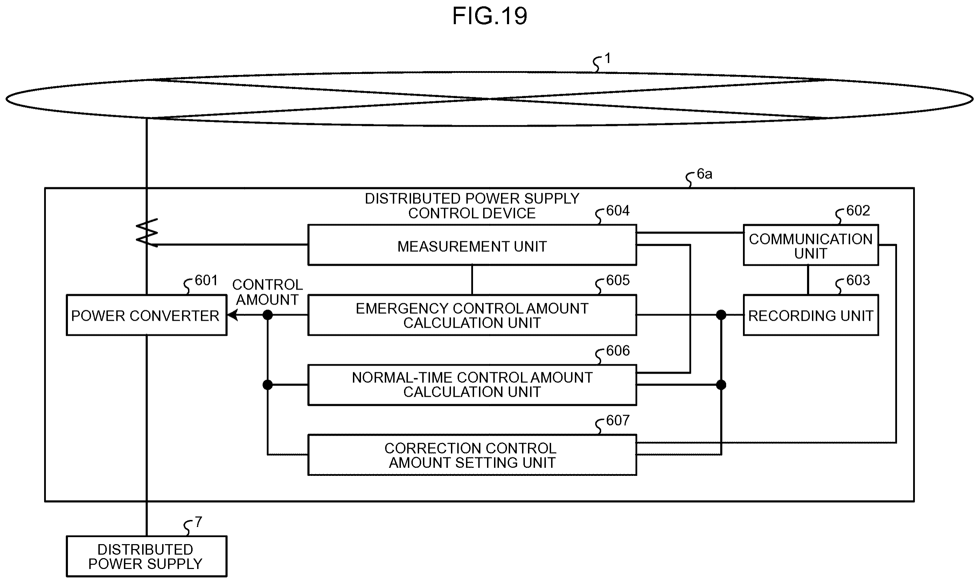

FIG. 19 is a block diagram illustrating an exemplary configuration of the distributed power supply control device 6a according to the third embodiment. As illustrated in FIG. 19, the distributed power supply control device 6a is obtained by adding a correction control amount setting unit 607 to the distributed power supply control device 6 of the first embodiment illustrated in FIG. 3. The correction control amount setting unit 607 acquires the correction control amount determined by the central calculation device 5a via the communication unit 602. The correction control amount setting unit 607 sets the acquired correction control amount in the power converter 601 as a command value of the active power and the reactive power, that is, outputs the same to the power converter 601. Similarly to FIG. 7 described in the first embodiment, the power converter 601 performs the power control using the sum of the command values of the active power and the reactive power from the emergency control amount calculation unit 605, the normal-time control amount calculation unit 606, and the correction control amount setting unit 607 as the final active power and reactive power control command value. That is, in the third embodiment, the power converter 601 performs power control, using the correction control amount. The power converter 601 may prioritize the command values of the active power and the reactive power from the correction control amount setting unit 607, and ignore the command values of the active power and the reactive power from the emergency control amount calculation unit 605 and the normal-time control amount calculation unit 606.

The output of the correction control amount, that is, the command values of the active power and the reactive power from the correction control amount setting unit 607, continues for a certain period of time and then decreases. The output duration of the correction control amount, that is, the command values of the active power and the reactive power from the correction control amount setting unit 607, may be about several minutes as long as it is output until the output of the large-scale power supply facility 2 is sufficiently controlled by, for example, the governor free operation of the large-scale power supply facility 2, load frequency control (LFC), which is the frequency control function of the transmission and distribution system 1.

In general, in a case where the central calculation device 5a detects a system disturbance, determines a control amount of the distributed power supply control device 6a, and transmits the control amount from the central calculation device 5a to the distributed power supply control device 6a via a communication network, a certain amount of time is required from detection of the system disturbance to execution of control of the distributed power supply 7. In the emergency control of the distributed power supply control device 6a, since the control parameters are determined in advance in the central calculation device 5a, the emergency control amount may be excessive or insufficient due to a measurement error, occurrence of unexpected system disturbance, a difference in response between the model system used in the calculation and the actual system, and the like.

Therefore, according to the present embodiment, the distributed power supply control device 6a can perform high-speed control by the emergency control and correction of the control amount by the correction control by combining the emergency control performed using the measurement information of the distributed power supply control device and the correction control performed in response to the command from the central calculation device 5a, and can contribute to improvement of the stability of the transmission and distribution system 1.

Fourth Embodiment.

In the fourth embodiment, a case of controlling a control mode for the power converter 601 of the distributed power supply control device will be described.

The configuration of the power system 100 in the fourth embodiment is similar to the configuration of the power system 100 in the first embodiment illustrated in FIG. 1. However, in the fourth embodiment, as will be described later, the distributed power supply control device 6 illustrated in FIG. 1 will be described as a distributed power supply control device 6b.

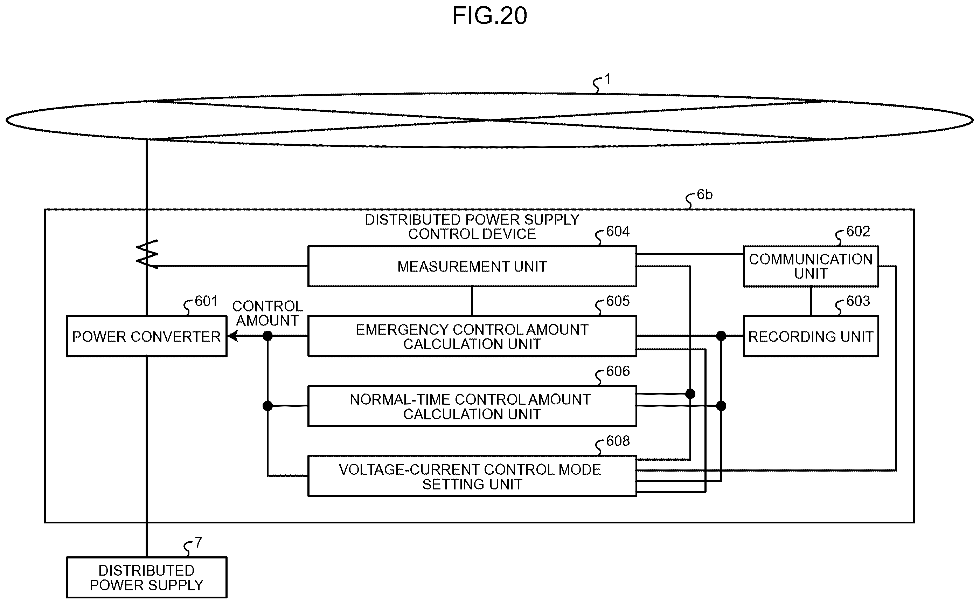

FIG. 20 is a block diagram illustrating an exemplary configuration of the distributed power supply control device 6b according to the fourth embodiment. As illustrated in FIG. 20, the distributed power supply control device 6b is obtained by adding a voltage-current control mode setting unit 608 to the distributed power supply control device 6 of the first embodiment illustrated in FIG. 3. The voltage-current control mode setting unit 608 sets the control mode of the power converter 601 on the basis of the measurement information acquired from the measurement unit 604 and the activation information of the emergency control acquired from the emergency control amount calculation unit 605. Specifically, the voltage-current control mode setting unit 608 sets the control mode of the power converter 601 so as to: allow the inverter to operate in grid forming (GFM), i.e., a voltage control type in which the inverter operates as a voltage source in a normal state in which no system disturbance occurs; and allow the inverter to operate in grid-following (GFL), i.e., a current control type in which the inverter operates as a current source at the time of occurrence of the system disturbance. That is, the voltage-current control mode setting unit 608 operates the power converter 601 in the voltage control type when no system disturbance occurs in the transmission and distribution system 1, and operates the power converter 601 in the current control type when a system disturbance occurs in the transmission and distribution system 1.

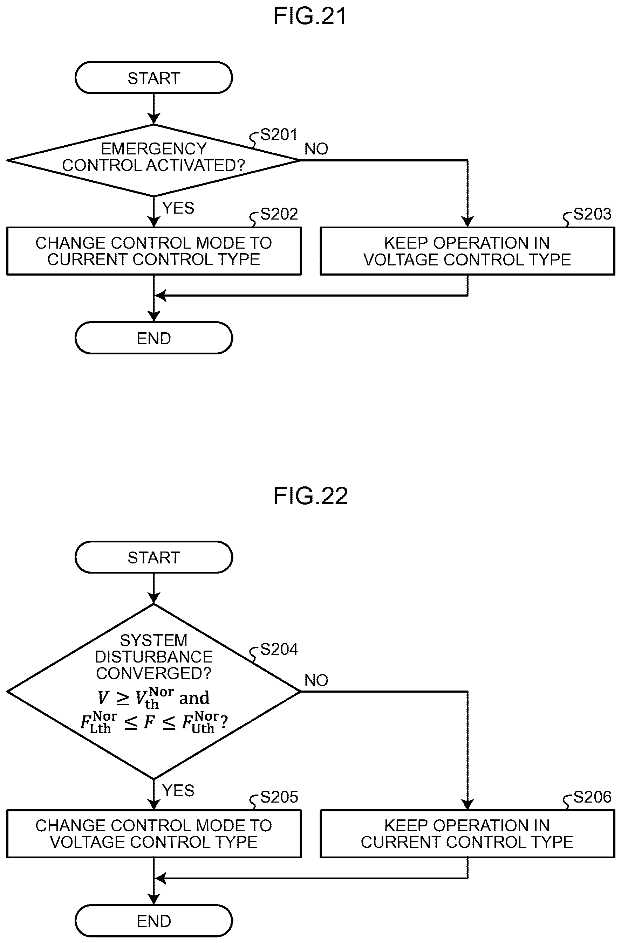

FIG. 21 is a flowchart illustrating an operation in which the voltage-current control mode setting unit 608 changes the control mode of the power converter 601 when a system disturbance occurs in normal times in the distributed power supply control device 6b according to the fourth embodiment. When the emergency control is activated in the emergency control amount calculation unit 605 (step S201: Yes), the voltage-current control mode setting unit 608 changes the control mode of the power converter 601 from the voltage control type to the current control type (step S202). When the emergency control is not activated in the emergency control amount calculation unit 605 (step S201: No), the voltage-current control mode setting unit 608 keeps the power converter 601 operating in the control mode of the voltage control type (step S203).

FIG. 22 is a flowchart illustrating an operation in which the voltage-current control mode setting unit 608 changes the control mode of the power converter 601 when the system disturbance converges at the time of occurrence of the system disturbance in the distributed power supply control device 6b according to the fourth embodiment. The voltage-current control mode setting unit 608 determines whether the system disturbance has converged from the measurement information acquired from the measurement unit 604 (step S204). For example, the voltage-current control mode setting unit 608 determines that the system disturbance has converged when the system voltage $V \geq$ the system voltage threshold $V_{th}^{Nor}$ and the system frequency threshold $F_{Lth}^{Nor} \leq$ the system frequency $F \leq$ the system frequency threshold $F_{Uth}^{Nor}$, and determines that the system disturbance has not converged when at least one of the above conditions is not satisfied. Upon determining that the system disturbance has converged (step S204: Yes), the voltage-current control mode setting unit 608 changes the control mode of the power converter 601 to the voltage control type (step S205). Upon determining that the system disturbance has not converged (step S204: No), the voltage-current control mode setting unit 608 keeps the power converter 601 operating in the control mode of the current control type (step S206).

The method for determining whether the system disturbance has converged in the voltage-current control mode setting unit 608 is not limited to the above example. In the example of FIG. 22, the system voltage threshold $V_{th}^{Nor}$, the system frequency threshold $F_{Lth}^{Nor}$, and the system frequency threshold $F_{uth}^{Nor}$ are control parameters, and these control parameters may be values set by the central calculation device 5.

In general, a current control type inverter has high followability to command values of active power and reactive power, but it is necessary to change the command value using measurement information such as voltage, current, and frequency, and it is not possible to perform a high-speed response equivalent to inertia of a synchronous generator. On the other hand, the voltage control type inverter has poor followability to the command values of the active power and the reactive power, but can perform high-speed response equivalent to inertia such as virtual synchronous generator control by simulating response of the synchronous generator.

Therefore, according to the present embodiment, the distributed power supply control device 6b operates the power converter 601 in the voltage control type in normal times, and operates the power converter 601 in the current control type when a system disturbance occurs. As a result, the distributed power supply control device 6b can achieve both a high-speed response equivalent to the inertia of the synchronous generator immediately after the occurrence of the system disturbance and good followability to the stabilization control by the emergency control and the normal-time control performed during the system disturbance, and can contribute to the improvement of the stability of the transmission and distribution system 1.

The configurations described in the above-mentioned embodiments indicate examples. The embodiments can be combined with another well-known technique and with each other, and some of the configurations can be omitted or changed in a range not departing from the gist.

Reference Signs List

1 transmission and distribution system; 2-1 to 2-3 large-scale power supply facility; 3-1 to 3-3 load; 4 distributed power supply control system; 5, 5a central calculation device; 6, 6-1 to 6-4, 6a, 6b distributed power supply control device; 7, 7-1 to 7-4 distributed power supply; 8 measurement device; 51, 602 communication unit; 52, 603 recording unit; 53 system information setting unit; 54 system disturbance setting unit; 55 system response calculation unit; 56 control parameter setting unit; 57 correction control amount calculation unit; 90, 93 processing circuitry; 91 processor; 92 memory; 100 power system; 601 power converter; 604 measurement unit; 605 emergency control amount calculation unit; 606 normal-time control amount calculation unit; 607 correction control amount setting unit; 608 voltage-current control mode setting unit.

**Claims**

1. A distributed power supply control system comprising:

    a central calculation device to set a control parameter of power control that is performed by a plurality of distributed power supply control devices each connected to a corresponding one of different distributed power supplies, the power control being performed on power supplied from the distributed power supply; and
    the plurality of the distributed power supply control devices each to measure a system state that is a state of power at a point of a transmission and distribution system connected thereto, calculate an emergency control amount according to a type of a system disturbance by using measurement information on the system state and the control parameter when the system disturbance occurs in the transmission and distribution system, and perform the power control.

2. The distributed power supply control system according to claim 1, wherein
the distributed power supply control device calculates a normal-time control amount in a state where the system disturbance does not occur in the transmission and distribution system, and performs the power control, using the emergency control amount and the normal-time control amount.

3. The distributed power supply control system according to claim 1 or 2, wherein
the distributed power supply control device measures, as the system state, a system voltage, a system frequency, and a frequency change rate of the system frequency at a point of the transmission and distribution system connected thereto, and determines presence or absence of occurrence of the system disturbance in the transmission and distribution system and a type of the system disturbance when the system disturbance occurs in the transmission and distribution system, by using measurement information on the system state and the control parameter.

4. The distributed power supply control system according to claim 3, wherein

    the central calculation device sets, as the control parameter, a system fault detection threshold for the system voltage for detecting a system fault as the system disturbance, and
    the distributed power supply control device determines that the system fault has occurred when the system voltage is less than the system fault detection threshold.

5. The distributed power supply control system according to claim 3 or 4, wherein

    the central calculation device sets, as the control parameter, a first power supply drop detection threshold for the frequency change rate and a second power supply drop detection threshold for the system frequency, the first power supply drop detection threshold and the second power supply drop detection threshold being for detecting, as the system disturbance, a power supply drop or a disconnection of a power supply line that is a power transmission line connected to the power supply, and
    the distributed power supply control device determines that drop of the power supply or disconnection of the power supply line has occurred when the frequency change rate being less than the first power supply drop detection threshold and/or the system frequency being less than the second power supply drop detection threshold is satisfied.

6.  The distributed power supply control system according to claim 3 or 5, wherein

    the central calculation device sets, as the control parameter, a first load drop detection threshold for the frequency change rate and a second load drop detection threshold for the system frequency, the first load drop detection threshold and the second load drop detection threshold being for detecting, as the system disturbance, a load drop or a disconnection of a load line that is a power transmission line connected to the power supply, and
    the distributed power supply control device determines that drop of the load or disconnection of the load line has occurred when the frequency change rate being larger than the first load drop detection threshold and/or the system frequency being larger than the second load drop detection threshold is satisfied.

7.  The distributed power supply control system according to any one of claims 3 to 6, wherein

    the central calculation device or the distributed power supply control device sets, as the control parameter, an adjustment flag to an on state, the adjustment flag preventing the distributed power supply control device from detecting a type other than a system fault as the system disturbance for a prescribed period after the system fault occurs in the transmission and distribution system, and
    the distributed power supply control device does not detect a type other than the system fault as the system disturbance when the adjustment flag is in the on state.

8.  The distributed power supply control system according to claim 5, wherein

    the central calculation device or the distributed power supply control device sets, as the control parameter, an adjustment flag to an on state, the adjustment flag preventing the distributed power supply control device from using the first power supply drop detection threshold and the second power supply drop detection threshold for a prescribed period after a system fault occurs in the transmission and distribution system,
    the central calculation device sets, as the control parameter, a third power supply drop detection threshold for the frequency change rate and/or a fourth power supply drop detection threshold for the system frequency, the third power supply drop detection threshold and the fourth power supply drop detection threshold being for detecting drop of the power supply or disconnection of the power supply line, and

    in a case where the adjustment flag is in the on state, the distributed power supply control device determines that drop of the power supply or disconnection of the power supply line has occurred when the frequency change rate being less than the third power supply drop detection threshold and/or the system frequency being less than the fourth power supply drop detection threshold is satisfied.

9.  The distributed power supply control system according to claim 6, wherein

    the central calculation device or the distributed power supply control device sets, as the control parameter, an adjustment flag to an on state, the adjustment flag preventing the distributed power supply control devices from using the first load drop detection threshold and the second load drop detection threshold for a prescribed period after a system fault occurs in the transmission and distribution system,
    the central calculation device sets, as the control parameter, a third load drop detection threshold for the frequency change rate and/or a fourth load drop detection threshold for the system frequency, the third load drop detection threshold and the fourth load drop detection threshold being for detecting drop of the load or disconnection of the load line, and
    in a case where the adjustment flag is in the on state, the distributed power supply control device determines that drop of the load or disconnection of the load line has occurred when the frequency change rate being larger than the third load drop detection threshold and/or the system frequency being larger than the fourth load drop detection threshold is satisfied.

10. The distributed power supply control system according to any one of claims 1 to 9, wherein

    the central calculation device sets, as the control parameter, a control flag for controlling whether the distributed power supply control devices perform the power control using the emergency control amount, and
    the distributed power supply control device performs the power control using the emergency control amount when the control flag is in an on state, and does not perform the power control using the emergency control amount when the control flag is in an off state.

11. The distributed power supply control system according to any one of claims 1 to 10, wherein

    the central calculation device sets, as the power control using the emergency control amount performed by the distributed power supply control device, the control parameter for allowing the distributed power supply control devices to output active power having a prescribed first magnitude and reactive power having a prescribed second magnitude for a prescribed first period, and then change magnitude of the active power and magnitude of the reactive power at a constant rate such that the output becomes zero after a prescribed second period, and

the distributed power supply control device controls the output of the active power and the output of the reactive power on a basis of the control parameter set by the central calculation device.

12. The distributed power supply control system according to any one of claims 1 to 11, wherein

the central calculation device calculates a correction control amount for the distributed power supply control device to perform the power control, and

the distributed power supply control device performs the power control, using the correction control amount.

13. The distributed power supply control system according to any one of claims 1 to 12, wherein the distributed power supply control device includes a power converter for performing the power control, operates the power converter in a voltage control type when the system disturbance does not occur in the transmission and distribution system, and operates the power converter in a current control type when the system disturbance occurs in the transmission and distribution system.

14. A distributed power supply control device in a distributed power supply control system including a plurality of distributed power supply control devices and a central calculation device to control operations of the plurality of distributed power supply control devices, the distributed power supply control device comprising:

a measurement unit to measure a system state that is a state of power at a point of a transmission and distribution system to which the distributed power supply control device is connected;

a communication unit to transmit, to the central calculation device, distributed power supply information including an operation state of a distributed power supply and measurement information indicating the system state measured by the measurement unit, and receive, from the central calculation device, a control parameter of power control set by the central calculation device;

an emergency control amount calculation unit to use the measurement information and the control parameter to determine presence or absence of occurrence of a system disturbance in the power transmission and distribution system and a type of the system disturbance when the system disturbance occurs in the power transmission and distribution system, and calculate an emergency control amount according to the type of the system disturbance when the system disturbance occurs, the emergency control amount being a control amount for a power converter to perform the power control; and

the power converter to perform the power control to convert power supplied from the distributed power supply into a form of power handled by the transmission and distribution system, using the emergency control amount.

15. The distributed power supply control device according to claim 14, comprising

a normal-time control amount calculation unit to use the measurement information and the control parameter to calculate a normal-time control amount that is a control amount for the power converter to perform the power control in a state where the system disturbance does not occur in the transmission and distribution system, wherein

the power converter performs the power control, using the emergency control amount and the normal-time control amount.

16. The distributed power supply control device according to claim 14 or 15, wherein

the measurement unit measures, as the system state, a system voltage, a system frequency, and a frequency change rate of the system frequency at a point of the transmission and distribution system to which the distributed power supply control device is connected, and the emergency control amount calculation unit determines presence or absence of occurrence of the system disturbance in the transmission and distribution system and a type of the system disturbance when the system disturbance occurs in the transmission and distribution system, by using measurement information on the system state and the control parameter.

17. The distributed power supply control device according to any one of claims 14 to 16, wherein

in the central calculation device, as the control parameter, a control flag for controlling whether the distributed power supply control device performs the power control using the emergency control amount is set, and

the emergency control amount calculation unit performs the power control using the emergency control amount when the control flag is in an on state, and does not perform the power control using the emergency control amount when the control flag is in an off state.

18. The distributed power supply control device according to any one of claims 14 to 17, wherein

in the central calculation device, as the power control using the emergency control amount performed by the distributed power supply control device, the control parameter is set for allowing the distributed power supply control device to output active power having a prescribed first magnitude and reactive power having a prescribed second magnitude for a prescribed first period, and then change magnitude of the active power and magnitude of the reactive power at a constant rate such that the output becomes zero after a prescribed second period, and

the emergency control amount calculation unit controls the output of the active power and the output of the reactive power on a basis of the control parameter set by the central calculation device.

19. The distributed power supply control device according to any one of claims 14 to 18, wherein

in the central calculation device, a correction control amount for the distributed power supply control device to perform the power control is calculated,

the distributed power supply control device further includes a correction control amount setting unit to set the correction control amount in the power converter, and

the power converter performs the power control, using the correction control amount.

20. The distributed power supply control device according to any one of claims 14 to 19, comprising a voltage-current control mode setting unit to operate the power converter in a voltage control type when the system disturbance does not occur in the transmission and distribution system, and operate the power converter in a current control type when the system disturbance occurs in the transmission and distribution system.

21. A central calculation device comprising:

a communication unit to receive, from a measurement device connected to a transmission and distribution system, first measurement information indicating a system state that is a state of power of the transmission and distribution system measured by the measurement device, and receive, from a plurality of distributed power supply control devices each connected to a corresponding one of different distributed power supplies, distributed power supply information including an operation state of the distributed power supply, and second measurement information indicating a system state that is a state of power at a point of the transmission and distribution system to which the distributed power supply control device is connected;

a system information setting unit to set a current state indicating a current operation state of the transmission and distribution system, on a basis of the first measurement information, the second measurement information, the distributed power supply information, and facility information indicating a facility included in the transmission and distribution system;

a system disturbance setting unit to set a system disturbance likely to occur in the transmission and distribution system, with respect to the current state of the transmission and distribution system;

a system response calculation unit to simulate response of the transmission and distribution system before the system disturbance occurs in the transmission and distribution system and response of the transmission and distribution system when the system disturbance set by the system disturbance setting unit occurs in the transmission and distribution system; and

a control parameter setting unit to set a control parameter for controlling power control on the distributed power supply performed by the plurality of the distributed power supply control devices, on a basis of response of the transmission and distribution system in a state where the system disturbance does not occur in the transmission and distribution system and response of the transmission and distribution system when the system disturbance occurs in the transmission and distribution system.

22. The central calculation device according to claim 21, wherein
the control parameter setting unit sets, as the control parameter, a system fault detection threshold for a system voltage of the transmission and distribution system for detecting a system fault as the system disturbance.

23. The central calculation device according to claim 21 or 22, wherein

the control parameter setting unit sets, as the control parameter, a first power supply drop detection threshold for a frequency change rate of the transmission and distribution system and/or a second power supply drop detection threshold for a system frequency, the first power supply drop detection threshold and the second power supply drop detection threshold being for detecting drop of a power supply or disconnection of a power supply line that is a power transmission line connected to the power supply as the system disturbance.

24. The central calculation device according to any one of claims 21 to 23, wherein

the control parameter setting unit sets, as the control parameter, a first load drop detection threshold for a frequency change rate of the transmission and distribution system and/or a second load drop detection threshold for a system frequency, the first load drop detection threshold and the second load drop detection threshold being for detecting drop of a load or disconnection of a load line that is a power transmission line connected to the load as the system disturbance.

25. The central calculation device according to any one of claims 21 to 24, wherein

the control parameter setting unit sets, as the control parameter, an adjustment flag to an on state, the adjustment flag preventing the distributed power supply control device from detecting a type other than a system fault as the system disturbance during a prescribed period after the system fault occurs in the transmission and distribution system.

26. The central calculation device according to any one of claims 21 to 25, wherein

the control parameter setting unit sets, as the control parameter, a control flag for controlling whether the distributed power supply control device performs the power control using an emergency control amount according to a type of the system disturbance.

27. The central calculation device according to any one of claims 21 to 26, wherein

the control parameter setting unit sets, as the power control using an emergency control amount according to a type of the system disturbance performed by the distributed power supply control device, the control parameter for allowing the distributed power supply control device to output active power having a prescribed first magnitude and reactive power having a prescribed second magnitude for a prescribed first period, and then change magnitude of the active power and magnitude of the reactive power at a constant rate such that the output becomes zero after a prescribed second period.

28. The central calculation device according to any one of claims 21 to 27, comprising

a correction control amount calculation unit to calculate a correction control amount for the distributed power supply control device to perform the power control.

29. A distributed power supply control method comprising:

a first step in which a central calculation device sets a control parameter of power control that is performed by a plurality of distributed power supply control devices each connected to a corresponding one of different distributed power supplies, the power control being performed on power supplied from the distributed power supply; and

a second step in which the plurality of the distributed power supply control devices each measure a system state that is a state of power at a point of a transmission and distribution system connected thereto, calculate an emergency control amount according to a type of a system disturbance by using measurement information on the system state and the control parameter when the system disturbance occurs in the transmission and distribution system, and perform the power control.

30. A system stabilization control method for a plurality of distributed power supply control devices in a distributed power supply control system including the distributed power supply control devices and a central calculation device to control operations of the plurality of distributed power supply control devices, the system stabilization control method comprising:

a measurement step in which a measurement unit measures a system state that is a state of power at a point of a transmission and distribution system to which the distributed power supply control device is connected;

a communication step in which a communication unit transmits, to the central calculation device, distributed power supply information including an operation state of a distributed power supply and measurement information indicating the system state measured by the measurement unit, and receives, from the central calculation device, a control parameter of power control set by the central calculation device;

an emergency control amount calculation step in which an emergency control amount calculation unit uses the measurement information and the control parameter to determine presence or absence of occurrence of a system disturbance in the power transmission and distribution system and a type of the system disturbance when the system disturbance occurs in the power transmission and distribution system, and calculate an emergency control amount according to the type of the system disturbance when the system disturbance occurs, the emergency control amount being a control amount for a power converter to perform the power control; and
a power conversion step in which the power converter performs the power control to convert power supplied from the distributed power supply into a form of power handled by the transmission and distribution system using the emergency control amount.

**31.** A control parameter setting method comprising:

a communication step in which a communication unit receives, from a measurement device connected to a transmission and distribution system, first measurement information indicating a system state that is a state of power of the transmission and distribution system measured by the measurement device, and receives, from a plurality of distributed power supply control devices each connected to a corresponding one of different distributed power supplies, distributed power supply information including an operation state of the distributed power supply, and second measurement information indicating a system state that is a state of power at a point of the transmission and distribution system to which the distributed power supply control device is connected;
a system information setting step in which a system information setting unit sets a current state indicating a current operation state of the transmission and distribution system, on a basis of the first measurement information, the second measurement information, the distributed power supply information, and facility information indicating a facility included in the transmission and distribution system;
a system disturbance setting step in which a system disturbance setting unit sets a system disturbance likely to occur in the transmission and distribution system, with respect to the current state of the transmission and distribution system;
a system response calculation step in which a system response calculation unit simulates response of the transmission and distribution system before the system disturbance occurs in the transmission and distribution system and response of the transmission and distribution system when the system disturbance set by the system disturbance setting unit occurs in the transmission and distribution system; and

a control parameter setting step in which a control parameter setting unit sets a control parameter for controlling power control on the distributed power supply performed by the plurality of the distributed power supply control devices, on a basis of response of the transmission and distribution system in a state where the system disturbance does not occur in the transmission and distribution system and response of the transmission and distribution system when the system disturbance occurs in the transmission and distribution system.

FIG.1

EP 4 661 235 A1

## FIG.2

CENTRAL CALCULATION DEVICE — 5

| | |
|---|---|
| SYSTEM INFORMATION SETTING UNIT — 53 | COMMUNI-CATION UNIT — 51 |
| SYSTEM DISTURBANCE SETTING UNIT — 54 | |
| RECORDING UNIT — 52 · SYSTEM RESPONSE CALCULATION UNIT — 55 | |
| CONTROL PARAMETER SETTING UNIT — 56 | |

# FIG.3

# FIG.4

# FIG.5

# FIG.6

FIG.7

EMERGENCY
ACTIVE POWER
CONTROL OUTPUT

$P_{Emg}$

NORMAL-TIME
ACTIVE POWER
CONTROL OUTPUT

$P_{Nor}$

$\Delta F$

FREQUENCY
DEVIATION

DEAD ZONE

$K_p^{\Delta F}$

$K_i^{\Delta F}/s$

$P_0$

BASE OUTPUT

$Q_0$

$\Delta V$

VOLTAGE
DEVIATION

DEAD ZONE

$K_p^{\Delta V}$

$K_i^{\Delta V}/s$

$Q_{Nor}$

NORMAL-TIME
REACTIVE POWER
CONTROL OUTPUT

$Q_{Emg}$

EMERGENCY
REACTIVE POWER
CONTROL OUTPUT

NORMAL-TIME CONTROL LOGIC

$P^*$

$Q^*$

EP 4 661 235 A1

## FIG.8

START

S101 $V < V_{th}^{FLT}$? — NO → S102 $RoCoF < RoCoF_{Lth}$? — NO → S103 $RoCoF > RoCoF_{Uth}$? — NO →

S101 YES ↓

S102 YES ↓

S103 YES ↓

S104 $F_{Lth} < F$? — NO

S104 YES ↓

S105 $F < F_{Uth}$ and $V_{Lth} < V$? — NO

S105 YES ↓

S106 $F_{Lth} < F$ and $V < V_{Uth}$? — NO

S106 YES ↓

S107 FAULT CONTROL FLAG ON? — NO

S107 YES ↓

S108 POWER SUPPLY DROP CONTROL FLAG ON? — NO

S108 YES ↓

S109 LOAD DROP CONTROL FLAG ON? — NO

S109 YES ↓

S110 ACTIVATE FAULT CONTROL

S111 ACTIVATE POWER SUPPLY DROP CONTROL

S112 ACTIVATE LOAD DROP CONTROL

S113 NOT ACTIVATE EMERGENCY CONTROL

END

EP 4 661 235 A1

# FIG.9

```
        START
          │
          ▼              ⌐S11
┌──────────────────────────┐
│ CONTROL PARAMETER SETTING │
└──────────────────────────┘
          │
          ▼              ⌐S12
┌──────────────────────────┐
│    EMERGENCY CONTROL     │
│    AMOUNT CALCULATION    │
└──────────────────────────┘
          │
          ▼              ⌐S13
┌──────────────────────────┐
│      POWER CONTROL       │
└──────────────────────────┘
          │
          ▼
         END
```

# FIG.10

```
        START
          │
          ▼              ⌐S21
┌──────────────────────────┐
│       MEASUREMENT        │
└──────────────────────────┘
          │
          ▼              ⌐S22
┌──────────────────────────┐
│  DISTRIBUTED POWER SUPPLY│
│      INFORMATION AND     │
│  MEASUREMENT INFORMATION │
│       TRANSMISSION       │
└──────────────────────────┘
          │
          ▼              ⌐S23
┌──────────────────────────┐
│CONTROL PARAMETER RECEPTION│
└──────────────────────────┘
          │
          ▼              ⌐S24
┌──────────────────────────┐
│    EMERGENCY CONTROL     │
│    AMOUNT CALCULATION    │
└──────────────────────────┘
          │
          ▼              ⌐S25
┌──────────────────────────┐
│      POWER CONTROL       │
└──────────────────────────┘
          │
          ▼
         END
```

# FIG.11

```
        ┌──────────────┐
        │    START     │
        └──────────────┘
                │
                ▼              ⌇S31
┌────────────────────────────────┐
│ RECEIVE FIRST MEASUREMENT      │
│ INFORMATION, SECOND            │
│ MEASUREMENT INFORMATION,       │
│ AND DISTRIBUTED POWER          │
│ SUPPLY INFORMATION             │
└────────────────────────────────┘
                │
                ▼              ⌇S32
┌────────────────────────────────┐
│     CURRENT STATE SETTING      │
└────────────────────────────────┘
                │
                ▼              ⌇S33
┌────────────────────────────────┐
│   SYSTEM DISTURBANCE SETTING   │
└────────────────────────────────┘
                │
                ▼              ⌇S34
┌────────────────────────────────┐
│          SIMULATION            │
└────────────────────────────────┘
                │
                ▼              ⌇S35
┌────────────────────────────────┐
│   CONTROL PARAMETER SETTING    │
└────────────────────────────────┘
                │
                ▼
        ┌──────────────┐
        │     END      │
        └──────────────┘
```

# FIG.12

90

| 91 | 92 |
|---|---|
| PROCESSOR | MEMORY |

# FIG.13

93

| 93 |
|---|
| PROCESSING CIRCUITY |

# FIG.14

START

S101 — $V < V_{th}^{FLT}$? — NO

YES

S121 — $F < F_{Lth}^{GD}$? — NO

YES

S122 — $F > F_{Uth}^{LD}$? — NO

YES

S104 — $F_{Lth} < F$? — NO

YES

S105 — $F < F_{Uth}$ and $V_{Lth} < V$? — NO

YES

S106 — $F_{Lth} < F$ and $V < V_{Uth}$? — NO

YES

S107 — FAULT CONTROL FLAG ON? — NO

YES

S108 — POWER SUPPLY DROP CONTROL FLAG ON? — NO

YES

S109 — LOAD DROP CONTROL FLAG ON? — NO

YES

S110 — ACTIVATE FAULT CONTROL

S111 — ACTIVATE POWER SUPPLY DROP CONTROL

S112 — ACTIVATE LOAD DROP CONTROL

S113 — NOT ACTIVATE EMERGENCY CONTROL

END

EP 4 661 235 A1

# FIG.15

EP 4 661 235 A1

FIG.16

START

S101 — $V < V_{th}^{FLT}$?
- YES → S104
- NO → S141

S141 — POWER SUPPLY LOAD DROP CONTROL ADJUSTMENT FLAG OFF?
- YES → S102
- NO → S113

S102 — $RoCoF < RoCoF_{Lth}$?
- YES → S105
- NO → S103

S103 — $RoCoF > RoCoF_{Uth}$?
- YES → S106
- NO → S113

S104 — $F_{Lth} < F$?
- YES → S107
- NO → S105

S105 — $F < F_{Uth}$ and $V_{Lth} < V$?
- YES → S108
- NO → S106

S106 — $F_{Lth} < F$ and $V < V_{Uth}$?
- YES → S109
- NO → S113

S107 — FAULT CONTROL FLAG ON?
- YES → S110
- NO → S108

S108 — POWER SUPPLY DROP CONTROL FLAG ON?
- YES → S111
- NO → S109

S109 — LOAD DROP CONTROL FLAG ON?
- YES → S112
- NO → S113

S110 — ACTIVATE FAULT CONTROL

S111 — ACTIVATE POWER SUPPLY DROP CONTROL

S112 — ACTIVATE LOAD DROP CONTROL

S113 — NOT ACTIVATE EMERGENCY CONTROL

END

# FIG.17

START

S101 $V < V_{th}^{FLT}$?
— NO →

YES ↓

S141 POWER SUPPLY LOAD DROP CONTROL ADJUSTMENT FLAG OFF?
— NO →

YES ↓

S142 $RoCoF < RoCoF_{Lth2}$?
— NO →

YES ↓

S143 $RoCoF > RoCoF_{Uth2}$?
— NO →

S102 $RoCoF < RoCoF_{Lth}$?

NO → YES →

YES ↓

S103 $RoCoF > RoCoF_{Uth}$?

NO →

YES ↓

S104 $F_{Lth} < F$?
— NO →

YES ↓

S105 $F < F_{Uth}$ and $V_{Lth} < V$?
— NO →

YES ↓

S106 $F_{Lth} < F$ and $V < V_{Uth}$?
— NO →

YES ↓

S107 FAULT CONTROL FLAG ON?
— NO →

YES ↓

S108 POWER SUPPLY DROP CONTROL FLAG ON?
— NO →

YES ↓

S109 LOAD DROP CONTROL FLAG ON?
— NO →

YES ↓

S110 ACTIVATE FAULT CONTROL

S111 ACTIVATE POWER SUPPLY DROP CONTROL

S112 ACTIVATE LOAD DROP CONTROL

S113 NOT ACTIVATE EMERGENCY CONTROL

END

# FIG.18

# FIG.19

DISTRIBUTED POWER SUPPLY CONTROL DEVICE ⌇6a

MEASUREMENT UNIT ⌇604

COMMUNICATION UNIT ⌇602

POWER CONVERTER ⌇601

CONTROL AMOUNT

EMERGENCY CONTROL AMOUNT CALCULATION UNIT ⌇605

RECORDING UNIT ⌇603

NORMAL-TIME CONTROL AMOUNT CALCULATION UNIT ⌇606

CORRECTION CONTROL AMOUNT SETTING UNIT ⌇607

DISTRIBUTED POWER SUPPLY ⌇7

# FIG.20

EP 4 661 235 A1

# FIG.21

START

S201
EMERGENCY CONTROL ACTIVATED? —NO→

YES ↓ S202
CHANGE CONTROL MODE TO CURRENT CONTROL TYPE

S203
KEEP OPERATION IN VOLTAGE CONTROL TYPE

END

# FIG.22

START

S204
SYSTEM DISTURBANCE CONVERGED?
$V \geq V_{th}^{Nor}$ and
$F_{Lth}^{Nor} \leq F \leq F_{Uth}^{Nor}$? —NO→

YES ↓ S205
CHANGE CONTROL MODE TO VOLTAGE CONTROL TYPE

S206
KEEP OPERATION IN CURRENT CONTROL TYPE

END

## INTERNATIONAL SEARCH REPORT

International application No.

**PCT/JP2023/003635**

| A. | CLASSIFICATION OF SUBJECT MATTER |
|---|---|

*H02J 3/24*(2006.01)i; *H02J 3/38*(2006.01)i
FI:   H02J3/24; H02J3/38

According to International Patent Classification (IPC) or to both national classification and IPC

| B. | FIELDS SEARCHED |
|---|---|

Minimum documentation searched (classification system followed by classification symbols)

H02J3/24; H02J3/38

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| X | JP 2021-182815 A (HITACHI, LTD.) 25 November 2021 (2021-11-25) | 1-2, 29 |
| | paragraphs [0010]-[0053], fig. 1-9 | |
| Y | | 3-6, 10, 12-17, 19-20, 30 |
| A | | 7-9, 11, 18, 21-28, 31 |
| Y | JP 2022-039749 A (CENTRAL RESEARCH INSTITUTE OF ELECTRIC POWER INDUSTRY) 10 March 2022 (2022-03-10) | 3-6, 10, 12-13, 16-17, 19-20 |
| | paragraphs [0043], [0049], [0050] | |
| Y | JP 2005-151628 A (MITSUBISHI ELECTRIC CORPORATION) 09 June 2005 (2005-06-09) | 4-6, 10, 12-13 |
| | paragraph [0012] | |
| Y | JP 2002-034155 A (KABUSHIKI KAISHA TOSHIBA) 31 January 2002 (2002-01-31) | 10, 12-13, 17, 19-20 |
| | paragraphs [0002]-[0014], fig. 19 | |
| Y | JP 2011-135688 A (CHUBU ELECTRIC POWER CO., INC.) 07 July 2011 (2011-07-07) | 12-13, 19-20 |
| | paragraphs [0052]-[0062] | |

☑ Further documents are listed in the continuation of Box C.      ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **11 April 2023** | **18 April 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| International application No. |
|---|
| **PCT/JP2023/003635** |

### C. DOCUMENTS CONSIDERED TO BE RELEVANT

| Category* | Citation of document, with indication, where appropriate, of the relevant passages | Relevant to claim No. |
|---|---|---|
| Y | JP 2021-141704 A (TOKYO ELECTRIC POWER COMPANY HOLDINGS, INC.) 16 September 2021 (2021-09-16)<br>paragraphs [0013], [0046]-[0057], fig. 4 | 13, 20 |
| Y | JP 2016-189664 A (HITACHI, LTD.) 04 November 2016 (2016-11-04)<br>paragraph [0034] | 14-17, 19-20, 30 |

Form PCT/ISA/210 (second sheet) (January 2015)

## INTERNATIONAL SEARCH REPORT
### Information on patent family members

International application No.

**PCT/JP2023/003635**

| Patent document cited in search report | | | Publication date (day/month/year) | Patent family member(s) | Publication date (day/month/year) |
|---|---|---|---|---|---|
| JP | 2021-182815 | A | 25 November 2021 | US 2021/0364556 A1 paragraphs [0020]-[0080], fig. 1-9 EP 3913760 A1 | |
| JP | 2022-039749 | A | 10 March 2022 | (Family: none) | |
| JP | 2005-151628 | A | 09 June 2005 | (Family: none) | |
| JP | 2002-034155 | A | 31 January 2002 | (Family: none) | |
| JP | 2011-135688 | A | 07 July 2011 | (Family: none) | |
| JP | 2021-141704 | A | 16 September 2021 | (Family: none) | |
| JP | 2016-189664 | A | 04 November 2016 | US 2018/0054059 A1 paragraph [0059] | |

Form PCT/ISA/210 (patent family annex) (January 2015)

**REFERENCES CITED IN THE DESCRIPTION**

**Patent documents cited in the description**

- JP 2021182815 A